# EUROPEAN PATENT APPLICATION

(11) **EP 4 195 565 A1**
(43) Date of publication of application: **14.06.2023**
(21) Application number: 21853728.0
(22) Date of filing: 06.08.2021
(51) Int. Cl.: H04L 5/00

(54) **INFORMATION TRANSMISSION METHOD, NETWORK DEVICE, TERMINAL DEVICE AND STORAGE MEDIUM**

(30) Priority: 07.08.2020 CN 202010791707
(71) Applicant: Datang Mobile Communications Equipment Co., Ltd., Beijing 100085 (CN)
(72) Inventor: HUANG, Qiuping, Beijing 100085 (CN); SU, Xin, Beijing 100085 (CN); GAO, Qiubin, Beijing 100085 (CN)
(74) Representative: Studio Torta S.p.A.
(86) International application number: PCT/CN2021/111235
(87) International publication number: WO 2022/028585

(57) **Abstract**

The embodiments of the present disclosure provide an information transmission method, a network device, a terminal device and a storage medium, which can improve the demodulation performance of a terminal and/or reduce pilot overheads in a high-speed movement scenario. Said method comprises: transmitting, to a terminal device, quasi-co-location (QCL) configuration information of a downlink signal, the QCL configuration information indicating at least two reference signals and a QCL type corresponding to the reference signals, a first reference signal in the reference signals being used by the terminal device to determine a Doppler characteristic of the downlink signal, and a second reference signal in the reference signals being used by the terminal device to determine a time delay characteristic of the downlink signal, there being one or more first reference signals, and there being one or more second reference signals; and transmitting the downlink signal to the terminal device.

## Description

### CROSS-REFERENCE TO RELATED APPLICATION

The present application claims priority to Chinese patent application No. 2020107917074 filed on August 07, 2020, entitled "Information Transmission Method, Network Device, Terminal Device and Storage Medium", which is hereby incorporated by reference in its entirety.

### FIELD

The present application relates to the field of communication technologies, and in particular, to methods for information transmission, network devices, user equipment and a storage medium.

### BACKGROUND

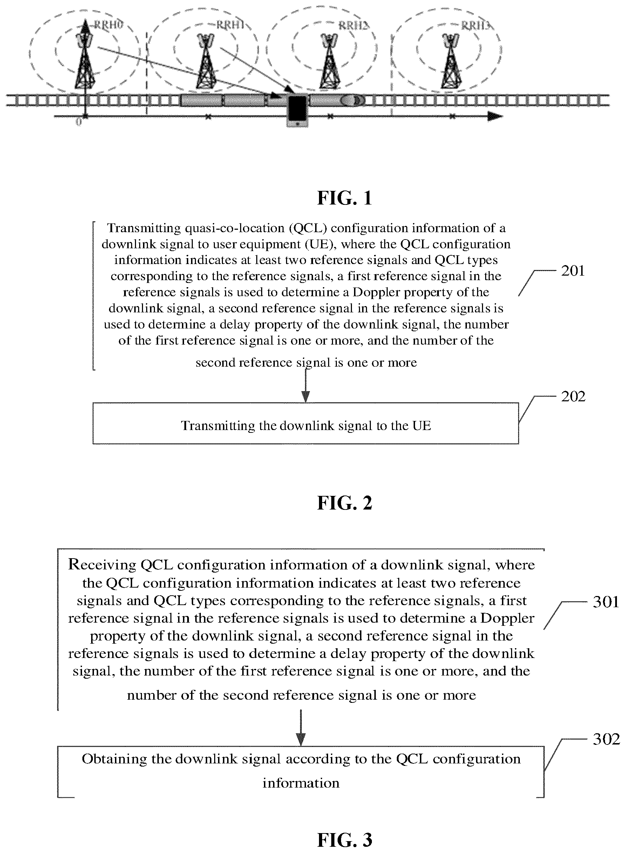

When user equipment (UE) performs channel estimation for physical downlink shared channel (PDSCH), it usually obtains a channel estimation value for a demodulation reference signal (DMRS) resource elements (RE) using a DMRS and then obtain channel estimation values for the PDSCH RE through interpolation. Since DMRS may have fewer physical resource blocks (PRB), the measurement accuracy of large-scale parameters (such as Doppler shift, Doppler spread, average delay and delay spread) cannot be guaranteed, and it is impossible to obtain accurate interpolation coefficients for channel estimation. In order to improve UE channel estimation performance, the UE is usually required to use a tracking reference signal (TRS) to obtain large-scale parameters in the time domain and/or frequency domain, and use them to obtain the interpolation coefficients for channel estimation. In high-speed rail scenarios, a single frequency network (SFN) deployment scheme is usually used, referred to as an HST-SFN scenario to avoid that the UE hands over frequently between cells. In a schematic diagram of the deployment scheme of the HST-SFN scenario shown in FIG. 1, multiple remote radio heads (RRH) are connected to the same building baseband unit (BBU) through optical fibers, and two transmission reception points (TRP) are usually deployed on each RRH and are directed to different beam directions to cover the rails. All RRHs connected to the same BBU share the same cell identity document (ID).

The information transmission scheme for the traditional HST-SFN scenario is transparent SFN transmission, that is, a downlink signal (such as PDSCH and DMRS for PDSCH) is transmitted from the TRP on the RRH of multiple network devices, and a transmission configuration indication (TCI) state is configured for each UE, each TCI state at least indicates different reference signals configured for each UE.

The UE estimates Doppler property of the channel over which the PDSCH is conveyed (referred to as the Doppler property of the PDSCH based on the reference signal with the Doppler property (usually TRS) included in quasi co-location (QCL) types in the TCI state.

However, the network device configures different QCL reference signals for each UE, which will require a large amount of pilot overhead.

The traditional information transmission scheme has a problem of large pilot overhead.

### SUMMARY

Embodiments of the present application provide methods for information transmissions, network devices, user equipment (UE) and a storage medium, which can solve the defect of large pilot overhead in the related art.

An embodiment of the present application provides a method for information transmission, including:
transmitting quasi-co-location (QCL) configuration information of a downlink signal to UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
transmitting the downlink signal to the UE.

According to the method for information transmission in an embodiment of the present application, the transmitting the downlink signal to the UE includes:
transmitting the downlink signal through multiple transmission reception points (TRPs),
the method further includes:
   transmitting the reference signals to the UE, where the second reference signal is transmitted from a TRP that is different from the TRP used for transmitting the first reference signal among the TRPs used for transmitting the downlink signal.

According to the method for information transmission in an embodiment of the present application, the transmitting the downlink signal to the UE includes:
transmitting the downlink signal through multiple transmission reception points (TRPs),
the method further includes:
   transmitting the second reference signal simultaneously to the UE by using all TRPs used for transmitting the downlink signal.

According to the method for information transmission in an embodiment of the present application, the first reference signal is a reference signal corresponding to a QCL type being QCL-TypeA, and the second reference signal is a reference signal corresponding to a QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

According to the method for information transmission in an embodiment of the present application, the QCL configuration information is carried by a set of transmission configuration indication (TCI) states, and the set of TCI states includes any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI stat indicating at least both the first reference signal and the second reference signal corresponding to the QCL type being QCL-TypeA.

According to the method for information transmission in an embodiment of the present application, the downlink signal is transmitted by multiple transmission reception points (TRPs), and before transmitting the downlink signal to the UE, the method further includes any of the following items:
determining a frequency offset value of an uplink signal at a first TRP, and determining a frequency compensation value of the downlink signal at a second TRP according to the frequency offset value at the first TRP, where the first TRP is a TRP selected by the network device, the second TRP is one or more TRPs other than the first TRP;
determining a frequency offset value of the uplink signal at a third TRP in a reference beam direction, determining a frequency compensation value of the downlink signal at the third TRP according to the frequency offset value at the third TRP, and determining the frequency compensation value at the third TRP as a frequency compensation value at a fourth TRP in the reference beam direction, where the third TRP is a TRP in the reference beam direction, and the fourth TRP is one or more TRPs other than the third TRP in the reference beam direction;
determining one frequency offset value according to a signal received by a fifth TRP in the reference beam direction based on the uplink signal, and determining a frequency compensation value of a sixth TRP in the reference beam direction according to the frequency offset value, where the fifth TRP is a group of TRPs in the reference beam direction, and the sixth TRP is one or more TRPs other than the fifth TRP in the reference beam direction; and
determining one frequency offset value according to a signal received by all TRPs in the reference beam direction based on the uplink signal, and determining a frequency compensation value at a seventh TRP in another beam direction according to the frequency offset value, where the seventh TRP is one or more TRPs in a beam direction other than the reference beam direction;
the transmitting the downlink signal to the UE includes:
   transmitting the downlink signal to the UE according to the frequency compensation value.

According to the method for information transmission in an embodiment of the present application, the determining a frequency compensation value of the downlink signal at a second TRP according to the frequency offset value at the first TRP includes:
obtaining a difference between the frequency offset value at the first TRP and an obtained frequency offset value at the second TRP;
determining, in case that a frequency compensation value of the first TRP is 0, or no adjustment is performed on a downlink frequency of the downlink signal at the first TRP, that the frequency compensation value at the second TRP is the difference; or
determining, in case that the frequency compensation value of the first TRP is Δ*f*₁, that the frequency compensation value at the second TRP is a sum of the difference and Δ*f*₁, where Δ*f*₁ is not 0.

According to the method for information transmission in an embodiment of the present application, after determining the frequency offset value of the uplink signal at the third TRP in the direction of the reference beam, the method further includes:
determining frequency compensation values at each TRP in another beam direction according to the frequency offset value at the third TRP.

According to the method for information transmission in an embodiment of the present application, the determining frequency compensation values at each TRP in another beam direction according to the frequency offset value at the third TRP includes:
obtaining a difference between the frequency offset value at the third TRP and a frequency offset value at an eighth TRP, where the eighth TRP is one or more TRPs in a beam direction other than the reference beam direction;
determining, in case that the frequency compensation value of the third TRP is 0, or no adjustment is performed on a downlink frequency of the downlink signal at the third TRP, that frequency compensation values at all TRPs in a beam direction where the eighth TRP is located are the difference; or
determining, in case that the frequency compensation value of the third TRP is Δ*f*₂, that the frequency compensation values at all TRPs in a beam direction where the eighth TRP is located are a sum of the difference and Δ*f*₂, where Δ*f*₂ is not 0.

According to the method for information transmission in an embodiment of the present application, the method further includes at least one of the following items:
in case that the QCL configuration information indicates a first reference signal corresponding to the QCL type being QCL-TypeA and a second reference signal corresponding to the QCL type being QCL-TypeE, transmitting the first reference signal corresponding to the QCL type being QCL-TypeA through the first TRP, and transmitting the second reference signal corresponding to the QCL type being QCL-TypeE through one or more second TRPs;
in case that the QCL configuration information indicates a first reference signal corresponding to the QCL type being QCL-TypeB and a second reference signal corresponding to the QCL type being QCL-TypeA, transmitting the first reference signal corresponding to the QCL type being QCL-TypeB through the first TRP, and transmitting the second reference signal corresponding to the QCL type being QCL-TypeA through one or more second TRPs;
in case that the QCL configuration information indicates a first reference signal corresponding to the QCL type being QCL-TypeB and a second reference signal corresponding to the QCL type being QCL-TypeE, transmitting the first reference signal corresponding to the QCL type being QCL-TypeB through the first TRP, and transmitting the second reference signal corresponding to the QCL type being QCL-TypeE through one or more second TRPs; and
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through the first TRP, and transmitting the second reference signal corresponding to the QCL type being QCL-TypeA through one or more second TRPs.

According to the method for information transmission in an embodiment of the present application, the method further includes:
transmitting indication information of a QCL reference signal for the uplink signal to the UE, where the QCL reference signal is used for indicating a reference signal for determining the transmission frequency of the uplink signal.

According to the method for information transmission in an embodiment of the present application, the QCL reference signal is a signal in the first reference signal.

According to the method for information transmission in an embodiment of the present application, the method further includes:
transmitting TCI state indication information to the UE, where the TCI state indication information is used for indicating a TCI state corresponding to the first reference signal; or
transmitting sequence number indication information to the UE, where the sequence number indication information is used for indicating sequence numbers of the first reference signal among all QCL-TypeA reference signals indicated by TCI states associated with the downlink signal.

An embodiment of the present application further provides a method for information transmission, including:
receiving quasi-co-location (QCL) configuration information of a downlink signal to the UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
obtaining the downlink signal according to the QCL configuration information.

According to the method for information transmission in an embodiment of the present application, the obtaining the downlink signal according to the QCL configuration information includes:
determining the Doppler property of the downlink signal according to the first reference signal;
determining the delay property of the downlink signal according to the second reference signal; and
obtaining the downlink signal according to the Doppler property and the delay property.

According to the method for information transmission in an embodiment of the present application, the determining the delay property of the downlink signal according to the second reference signal includes:
determining the delay property of the downlink signal according to both the first reference signal and the second reference signal.

According to the method for information transmission in an embodiment of the present application, before the obtaining the downlink signal according to the Doppler property and the delay property, the method further includes:
receiving the reference signals transmitted by the network device, where the second reference signal is transmitted from a TRP that is different from the TRP transmitting the first reference signal among the TRPs used for transmitting the downlink signal.

According to the method for information transmission in an embodiment of the present application, before the obtaining the downlink signal according to the Doppler property and the delay property, the method further includes:
receiving the first reference signal and the second reference signal transmitted by the network device, where the second reference signal is transmitted from all TRPs used for transmitting the downlink signal.

According to the method for information transmission in an embodiment of the present application, the determining the Doppler property of the downlink signal according to the first reference signal, and the determining the delay property of the downlink signal according to the second reference signal, include:
determining the Doppler property of the downlink signal according to the first reference signal corresponding to the QCL type including both the Doppler property and the delay property; and determining the delay property of the downlink signal according to the first reference signal corresponding to the QCL type only including the delay property and the second reference signal corresponding to the QCL type including the delay property; or
determining the Doppler property of the downlink signal according to the first reference signal corresponding to the QCL type only including the Doppler property; and determining the delay property of the downlink signal according to the second reference signal corresponding to the QCL type only including the delay property; or
determining the Doppler property of the downlink signal according to the first reference signal corresponding to the QCL type only including the Doppler property; and determining the delay property of the downlink signal according to the second reference signal corresponding to the QCL type including the Doppler property and the delay property; or
determining the delay property of the downlink signal according to all the first reference signals corresponding to the QCL type including the Doppler property and the delay property and all the second reference signals corresponding to the QCL type including the Doppler property and the delay property; and determining the Doppler property of the downlink signal according to the first reference signal corresponding to the QCL type including the Doppler property and the delay property; or
determining the delay property of the downlink signal according to the second reference signal corresponding to the QCL type including the Doppler property and the delay property; and determining the Doppler property of the downlink signal according to the first reference signal corresponding to the QCL type including the Doppler property and the delay property.

According to the method for information transmission in an embodiment of the present application, the first reference signal is a specific reference signal among reference signals corresponding to the QCL type including Doppler property and delay property.

According to the method for information transmission in an embodiment of the present application, the second reference signal is a reference signal corresponding to the QCL type including Doppler property and delay property.

According to the method for information transmission in an embodiment of the present application, the first reference signal is a reference signal corresponding to a QCL type being QCL-TypeA, and the second reference signal is a reference signal corresponding to a QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

According to the method for information transmission in an embodiment of the present application, the QCL configuration information is carried by a set of transmission configuration indication (TCI) states, and the set of TCI states includes any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

According to the method for information transmission in an embodiment of the present application, the determining the Doppler property of the downlink signal according to the first reference signal, and the determining the delay property of the downlink signal according to the second reference signal, include:
determining the delay property of the downlink signal according to the first reference signal corresponding to the QCL type being QCL-TypeA and the second reference signal corresponding to the QCL type being QCL-TypeE, and determining the Doppler property of the downlink signal according to the first reference signal corresponding to the QCL type being QCL-TypeA; or
determining a time-domain property of the downlink signal according to the second reference signal corresponding to the QCL type being QCL-TypeA, and determining the Doppler property of the downlink signal according to the first reference signal corresponding to the QCL type being QCL-TypeB; or
determining a time-domain property of the downlink signal according to the second reference signal corresponding to the QCL type being QCL-TypeE, and determining the Doppler property of the downlink signal according to the first reference signal corresponding to the QCL type being QCL-TypeB; or
determining the delay property of the downlink signal according to all the first reference signal corresponding to the QCL type being QCL-TypeA and all the second reference signal corresponding to the QCL type being QCL-TypeA, and determining the Doppler property of the downlink signal according to a specific reference signal in the first reference signal corresponding to the QCL type being QCL-TypeA.

According to the method for information transmission in an embodiment of the present application, the specific reference signal is a reference signal indicated by the network device or a default reference signal.

According to the method for information transmission in an embodiment of the present application, frequency pre-compensation is performed when the network device transmits the downlink signal; the method further includes:
receiving indication information of the QCL reference signal for the uplink signal; and
determining a transmitting frequency of the uplink signal according to the indication information, where the uplink signal is an uplink signal used to determine a frequency pre-compensation value for the downlink signal in the network device.

According to the method for information transmission in an embodiment of the present application, the downlink signal is transmitted through multiple TRPs, frequency pre-compensation is performed at one or more TRPs, and the method further includes:
determining, by using the first reference signal, a transmitting frequency of the uplink signal used to calculate the frequency pre-compensation value for the downlink signal at each TRP.

An embodiment of the present application further provides a network device, including a memory, a transceiver, and a processor,
where the memory is configured to store a computer program, the transceiver is configured to transmit and receive data under the control of the processor, and the processor is configured to read the computer program in the memory and perform the following operations of:
transmitting quasi-co-location (QCL) configuration information of a downlink signal to UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
transmitting the downlink signal to the UE.

According to the network device in an embodiment of the present application, the transmitting the downlink signal to the UE includes:
transmitting the downlink signal through multiple transmission reception points (TRPs),
the transmitting the downlink signal to the UE further includes:
   transmitting the reference signals to the UE, where the second reference signal is transmitted from a TRP that is different from the TRP used for transmitting the first reference signal among the TRPs used for transmitting the downlink signal.

According to the network device in an embodiment of the present application, the transmitting the downlink signal to the UE includes:
transmitting the downlink signal through multiple transmission reception points (TRPs),
the transmitting the downlink signal to the UE further includes:
   transmitting the second reference signal simultaneously to the UE by using all TRPs used for transmitting the downlink signal.

According to the network device in an embodiment of the present application, the first reference signal is a reference signal corresponding to a QCL type being QCL-TypeA, and the second reference signal is a reference signal corresponding to a QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

According to the network device in an embodiment of the present application, the QCL configuration information is carried by a set of transmission configuration indication (TCI) states, and the set of TCI states includes any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

According to the network device in an embodiment of the present application, the downlink signal is transmitted by multiple transmission reception points (TRPs), and before transmitting the downlink signal to the UE, the processor is configured to further perform any of the following operations:
determining a frequency offset value of an uplink signal at a first TRP, and determining a frequency compensation value of the downlink signal at a second TRP according to the frequency offset value at the first TRP, where the first TRP is a TRP selected by the network device, the second TRP is one or more TRPs other than the first TRP;
determining a frequency offset value of the uplink signal at a third TRP in a reference beam direction, determining a frequency compensation value of the downlink signal at the third TRP according to the frequency offset value at the third TRP, and determining the frequency compensation value at the third TRP as a frequency compensation value at a fourth TRP in the reference beam direction, where the third TRP is a TRP in the reference beam direction, and the fourth TRP is one or more TRPs other than the third TRP in the reference beam direction;
determining one frequency offset value according to a signal received by a fifth TRP in the reference beam direction based on the uplink signal, and determining a frequency compensation value of a sixth TRP in the reference beam direction according to the frequency offset value, where the fifth TRP is a group of TRPs in the reference beam direction, and the sixth TRP is one or more TRPs other than the fifth TRP in the reference beam direction; and
determining one frequency offset value according to a signal received by all TRPs in the reference beam direction based on the uplink signal, and determining a frequency compensation value at a seventh TRP in another beam direction according to the frequency offset value, where the seventh TRP is one or more TRPs in a beam direction other than the reference beam direction;
the transmitting the downlink signal to the UE includes:
   transmitting the downlink signal to the UE according to the frequency compensation value.

According to the network device in an embodiment of the present application, the determining a frequency compensation value of the downlink signal at a second TRP according to the frequency offset value at the first TRP includes:
obtaining a difference between the frequency offset value at the first TRP and an obtained frequency offset value at the second TRP;
determining, in case that a frequency compensation value of the first TRP is 0, or no adjustment is performed on a downlink frequency of the downlink signal at the first TRP, that the frequency compensation value at the second TRP is the difference; or
determining, in case that the frequency compensation value of the first TRP is Δ*f*₁, that the frequency compensation value at the second TRP is a sum of the difference and Δ*f*₁, where Δ*f*₁ is not 0.

According to the network device in an embodiment of the present application, after determining the frequency offset value of the uplink signal at the third TRP in the direction of the reference beam, the processor is configured to further perform the operation of:
determining frequency compensation values at each TRP in another beam direction according to the frequency offset value at the third TRP.

According to the network device in an embodiment of the present application, the determining frequency compensation values at each TRP in another beam direction according to the frequency offset value at the third TRP includes:
obtaining a difference between the frequency offset value at the third TRP and a frequency offset value at an eighth TRP, where the eighth TRP is one or more TRPs in a beam direction other than the reference beam direction;
determining, in case that the frequency compensation value of the third TRP is 0, or no adjustment is performed on a downlink frequency of the downlink signal at the third TRP, that frequency compensation values at all TRPs in a beam direction where the eighth TRP is located are the difference; or
determining, in case that the frequency compensation value of the third TRP is Δ*f*₂, that the frequency compensation values at all TRPs in a beam direction where the eighth TRP is located are a sum of the difference and Δ*f*₂, where Δ*f*₂ is not 0.

According to the network device in an embodiment of the present application, the processor is configured to further perform at least one of the following operations:
in case that the QCL configuration information indicates a first reference signal corresponding to the QCL type being QCL-TypeA and a second reference signal corresponding to the QCL type being QCL-TypeE, transmitting the first reference signal corresponding to the QCL type being QCL-TypeA through the first TRP, and transmitting the second reference signal corresponding to the QCL type being QCL-TypeE through one or more second TRPs;
in case that the QCL configuration information indicates a first reference signal corresponding to the QCL type being QCL-TypeB and a second reference signal corresponding to the QCL type being QCL-TypeA, transmitting the first reference signal corresponding to the QCL type being QCL-TypeB through the first TRP, and transmitting the second reference signal corresponding to the QCL type being QCL-TypeA through one or more second TRPs;
in case that the QCL configuration information indicates a first reference signal corresponding to the QCL type being QCL-TypeB and a second reference signal corresponding to the QCL type being QCL-TypeE, transmitting the first reference signal corresponding to the QCL type being QCL-TypeB through the first TRP, and transmitting the second reference signal corresponding to the QCL type being QCL-TypeE through one or more second TRPs; and
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through the first TRP, and transmitting the second reference signal corresponding to the QCL type being QCL-TypeA through one or more second TRPs.

According to the network device in an embodiment of the present application, the processor is configured to further perform the following operation:
transmitting indication information of a QCL reference signal for the uplink signal to the UE, where the QCL reference signal is used for indicating a reference signal used for determining the transmission frequency of the uplink signal.

According to the network device in an embodiment of the present application, the QCL reference signal is a signal in the first reference signal.

According to the network device in an embodiment of the present application, the processor is configured to further perform at least one of the following operations:
transmitting TCI state indication information to the UE, where the TCI state indication information is used for indicating a TCI state corresponding to the first reference signal; or
transmitting sequence number indication information to the UE, where the sequence number indication information is used for indicating sequence numbers of the first reference signal among all QCL-TypeA reference signals indicated by TCI states associated with the downlink signal.

An embodiment of the present application further provides a network device, including:
a first transmitting unit, configured to transmit quasi-co-location (QCL) configuration information of a downlink signal to the UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
a second transmitting unit, configured to transmit the downlink signal to the UE.

According to the network device in an embodiment of the present application, the second transmitting unit is further configured to:
transmit the downlink signal through multiple transmission reception points (TRPs),
the network device further includes:
a third transmitting unit, configured to transmit the reference signals to the UE, where the second reference signal is transmitted from a TRP that is different from the TRP used for transmitting the first reference signal among the TRPs used for transmitting the downlink signal.

According to the network device in an embodiment of the present application, the second transmitting unit is further configured to:
transmit the downlink signal through multiple transmission reception points (TRPs),
the network device further includes:
   a fourth transmitting unit, configured to transmit the second reference signal simultaneously to the UE by using all TRPs used for transmitting the downlink signal.

According to the network device in an embodiment of the present application, the first reference signal is a reference signal corresponding to a QCL type being QCL-TypeA, and the second reference signal is a reference signal corresponding to a QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

According to the network device in an embodiment of the present application, the QCL configuration information is carried by a set of transmission configuration indication (TCI) states, and the set of TCI states includes any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

According to the network device in an embodiment of the present application, the downlink signal is transmitted by multiple transmission reception points (TRPs), and the network device further includes a first determining unit, configured to:
determine a frequency offset value of an uplink signal at a first TRP, and determine a frequency compensation value of the downlink signal at a second TRP according to the frequency offset value at the first TRP, where the first TRP is a TRP selected by the network device, the second TRP is one or more TRPs other than the first TRP;
determine a frequency offset value of the uplink signal at a third TRP in a reference beam direction, determine a frequency compensation value of the downlink signal at the third TRP according to the frequency offset value at the third TRP, and determine the frequency compensation value at the third TRP as a frequency compensation value at a fourth TRP in the reference beam direction, where the third TRP is a TRP in the reference beam direction, and the fourth TRP is one or more TRPs other than the third TRP in the reference beam direction;
determine one frequency offset value according to a signal received by a fifth TRP in the reference beam direction based on the uplink signal, and determine a frequency compensation value of a sixth TRP in the reference beam direction according to the frequency offset value, where the fifth TRP is a group of TRPs in the reference beam direction, and the sixth TRP is one or more TRPs other than the fifth TRP in the reference beam direction; and
determine one frequency offset value according to a signal received by all TRPs in the reference beam direction based on the uplink signal, and determine a frequency compensation value at a seventh TRP in another beam direction according to the frequency offset value, where the seventh TRP is one or more TRPs in a beam direction other than the reference beam direction;
the second transmitting unit is configured to:
   transmit the downlink signal to the UE according to the frequency compensation value.

According to the network device in an embodiment of the present application, the determining a frequency compensation value of the downlink signal at a second TRP according to the frequency offset value at the first TRP includes:
obtaining a difference between the frequency offset value at the first TRP and an obtained frequency offset value at the second TRP;
determining, in case that a frequency compensation value of the first TRP is 0, or no adjustment is performed on a downlink frequency of the downlink signal at the first TRP, that the frequency compensation value at the second TRP is the difference; or
determining, in case that the frequency compensation value of the first TRP is Δ*f*₁, that the frequency compensation value at the second TRP is a sum of the difference and Δ*f*₁, where Δ*f*₁ is not 0.

According to the network device in an embodiment of the present application, after determining the frequency offset value of the uplink signal at the third TRP in the direction of the reference beam, the first determining unit is further configured to:
determine frequency compensation values at each TRP in another beam direction according to the frequency offset value at the third TRP.

According to the network device in an embodiment of the present application, the determining frequency compensation values at each TRP in another beam direction according to the frequency offset value at the third TRP includes:
obtaining a difference between the frequency offset value at the third TRP and a frequency offset value at an eighth TRP, where the eighth TRP is one or more TRPs in a beam direction other than the reference beam direction;
determining, in case that the frequency compensation value of the third TRP is 0, or no adjustment is performed on a downlink frequency of the downlink signal at the third TRP, that frequency compensation values at all TRPs in a beam direction where the eighth TRP is located are the difference; or
determining, in case that the frequency compensation value of the third TRP is Δf₂, that the frequency compensation values at all TRPs in a beam direction where the eighth TRP is located are a sum of the difference and Δ*f*₂, where Δ*f*₂ is not 0.

According to the network device in an embodiment of the present application, the network device further includes a fifth transmitting unit, configured to:
in case that the QCL configuration information indicates a first reference signal corresponding to the QCL type being QCL-TypeA and a second reference signal corresponding to the QCL type being QCL-TypeE, transmit the first reference signal corresponding to the QCL type being QCL-TypeA through the first TRP, and transmit the second reference signal corresponding to the QCL type being QCL-TypeE through one or more second TRPs;
in case that the QCL configuration information indicates a first reference signal corresponding to the QCL type being QCL-TypeB and a second reference signal corresponding to the QCL type being QCL-TypeA, transmit the first reference signal corresponding to the QCL type being QCL-TypeB through the first TRP, and transmit the second reference signal corresponding to the QCL type being QCL-TypeA through one or more second TRPs;
in case that the QCL configuration information indicates a first reference signal corresponding to the QCL type being QCL-TypeB and a second reference signal corresponding to the QCL type being QCL-TypeE, transmit the first reference signal corresponding to the QCL type being QCL-TypeB through the first TRP, and transmit the second reference signal corresponding to the QCL type being QCL-TypeE through one or more second TRPs; and
in case that the QCL configuration information indicates a first reference signal corresponding to the QCL type being QCL-TypeA and a second reference signal corresponding to the QCL type being QCL-TypeA, transmit the first reference signal corresponding to the QCL type being QCL-TypeA through the first TRP, and transmit the second reference signal corresponding to the QCL type being QCL-TypeA through one or more second TRPs.

According to the network device in an embodiment of the present application, the network device further includes:
a sixth transmitting unit, configured to transmit indication information of a QCL reference signal for the uplink signal to the UE, where the QCL reference signal is used for indicating a reference signal for determining the transmission frequency of the uplink signal.

According to the network device in an embodiment of the present application, the QCL reference signal is a signal in the first reference signal.

According to the network device in an embodiment of the present application, the network device further includes a seventh transmitting unit, configured to:
transmit TCI state indication information to the UE, where the TCI state indication information is used for indicating a TCI state corresponding to the first reference signal; or
transmit sequence number indication information to the UE, where the sequence number indication information is used for indicating sequence numbers of the first reference signal among all QCL-TypeA reference signals indicated by TCI states associated with the downlink signal.

An embodiment of the present application further provides user equipment, including a memory, a transceiver, and a processor,
where the memory is configured to store a computer program, the transceiver is configured to transmit and receive data under the control of the processor, and the processor is configured to read the computer program in the memory and perform the following operations of:
receiving quasi-co-location (QCL) configuration information of a downlink signal to the UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
obtaining the downlink signal according to the QCL configuration information.

According to the user equipment in an embodiment of the present application, the obtaining the downlink signal according to the QCL configuration information includes:
determining the Doppler property of the downlink signal according to the first reference signal;
determining the delay property of the downlink signal according to the second reference signal; and
obtaining the downlink signal according to the Doppler property and the delay property.

According to the user equipment in an embodiment of the present application, the determining the delay property of the downlink signal according to the second reference signal includes:
determining the delay property of the downlink signal according to both the first reference signal and the second reference signal.

According to the user equipment in an embodiment of the present application, before the obtaining the downlink signal according to the Doppler property and the delay property, the processor is configured to perform the following operation of:
receiving the reference signals transmitted by the network device, where the second reference signal is transmitted from a TRP that is different from the TRP transmitting the first reference signal among the TRPs used for transmitting the downlink signal.

According to the user equipment in an embodiment of the present application, before the obtaining the downlink signal according to the Doppler property and the delay property, the processor is configured to perform the following operation of:
receiving the first reference signal and the second reference signal transmitted by the network device, where the second reference signal is transmitted from all TRPs used for transmitting the downlink signal.

According to the user equipment in an embodiment of the present application, the determining the Doppler property of the downlink signal according to the first reference signal, and the determining the delay property of the downlink signal according to the second reference signal, include:
determining the Doppler property of the downlink signal according to the first reference signal corresponding to the QCL type including both the Doppler property and the delay property; and determining the delay property of the downlink signal according to the first reference signal corresponding to the QCL type only including the delay property and the second reference signal corresponding to the QCL type including the delay property; or
determining the Doppler property of the downlink signal according to the first reference signal corresponding to the QCL type only including the Doppler property; and determining the delay property of the downlink signal according to the second reference signal corresponding to the QCL type only including the delay property; or
determining the Doppler property of the downlink signal according to the first reference signal corresponding to the QCL type only including the Doppler property; and determining the delay property of the downlink signal according to the second reference signal corresponding to the QCL type including the Doppler property and the delay property; or
determining the delay property of the downlink signal according to all the first reference signals corresponding to the QCL type including the Doppler property and the delay property and all the second reference signals corresponding to the QCL type including the Doppler property and the delay property; and determining the Doppler property of the downlink signal according to the first reference signal corresponding to the QCL type including the Doppler property and the delay property; or
determining the delay property of the downlink signal according to the second reference signal corresponding to the QCL type including the Doppler property and the delay property; and determining the Doppler property of the downlink signal according to the first reference signal corresponding to the QCL type including the Doppler property and the delay property.

According to the user equipment in an embodiment of the present application, the first reference signal is a specific reference signal among reference signals corresponding to the QCL type including Doppler property and delay property.

According to the user equipment in an embodiment of the present application, the second reference signal is a reference signal corresponding to the QCL type including Doppler property and delay property.

According to the user equipment in an embodiment of the present application, the first reference signal is a reference signal corresponding to a QCL type being QCL-TypeA, and the second reference signal is a reference signal corresponding to a QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

According to the user equipment in an embodiment of the present application, the QCL configuration information is carried by a set of transmission configuration indication (TCI) states, and the set of TCI states includes any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

According to the user equipment in an embodiment of the present application, the determining the Doppler property of the downlink signal according to the first reference signal, and the determining the delay property of the downlink signal according to the second reference signal, include:
determining the delay property of the downlink signal according to the first reference signal corresponding to the QCL type being QCL-TypeA and the second reference signal corresponding to the QCL type being QCL-TypeE, and determining the Doppler property of the downlink signal according to the first reference signal corresponding to the QCL type being QCL-TypeA; or
determining a time-domain property of the downlink signal according to the second reference signal corresponding to the QCL type being QCL-TypeA, and determining the Doppler property of the downlink signal according to the first reference signal corresponding to the QCL type being QCL-TypeB; or
determining a time-domain property of the downlink signal according to the second reference signal corresponding to the QCL type being QCL-TypeE, and determining the Doppler property of the downlink signal according to the first reference signal corresponding to the QCL type being QCL-TypeB; or
determining the delay property of the downlink signal according to all the first reference signal corresponding to the QCL type being QCL-TypeA and all the second reference signal corresponding to the QCL type being QCL-TypeA, and determining the Doppler property of the downlink signal according to a specific reference signal in the first reference signal corresponding to the QCL type being QCL-TypeA.

According to the user equipment in an embodiment of the present application, the specific reference signal is a reference signal indicated by the network device or a default reference signal.

According to the user equipment in an embodiment of the present application, frequency pre-compensation is performed when the network device transmits the downlink signal; the processor is configured to further perform the following operations:
receiving indication information of the QCL reference signal for the uplink signal; and
determining a transmitting frequency of the uplink signal according to the indication information, where the uplink signal is an uplink signal used to determine a frequency pre-compensation value for the downlink signal in the network device.

According to the method for information transmission in an embodiment of the present application, the downlink signal is transmitted through multiple TRPs, and frequency pre-compensation is performed at one or more TRPs, the processor is configured to further perform the following operation:
determining, by using the first reference signal, a transmitting frequency of the uplink signal used to calculate the frequency pre-compensation value for the downlink signal at each TRP.

An embodiment of the present application further provides user equipment, including:
a first receiving unit, configured to receive QCL configuration information of a downlink signal to the UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
a second obtaining unit, configured to obtain the downlink signal according to the QCL configuration information.

According to the network device in an embodiment of the present application, the second obtaining unit is further configured to:
determine the Doppler property of the downlink signal according to the first reference signal;
determine the delay property of the downlink signal according to the second reference signal; and
obtain the downlink signal according to the Doppler property and the delay property.

According to the user equipment in an embodiment of the present application, the determining the delay property of the downlink signal according to the second reference signal includes:
determining the delay property of the downlink signal according to both the first reference signal and the second reference signal.

According to the user equipment in an embodiment of the present application, the determining the Doppler property of the downlink signal according to the first reference signal, and the determining the delay property of the downlink signal according to the second reference signal, include:
determining the Doppler property of the downlink signal according to the first reference signal corresponding to the QCL type including both the Doppler property and the delay property; and determining the delay property of the downlink signal according to the first reference signal corresponding to the QCL type only including the delay property and the second reference signal corresponding to the QCL type including the delay property; or
determining the Doppler property of the downlink signal according to the first reference signal corresponding to the QCL type only including the Doppler property; and determining the delay property of the downlink signal according to the second reference signal corresponding to the QCL type only including the delay property; or
determining the Doppler property of the downlink signal according to the first reference signal corresponding to the QCL type only including the Doppler property; and determining the delay property of the downlink signal according to the second reference signal corresponding to the QCL type including the Doppler property and the delay property; or
determining the delay property of the downlink signal according to all the first reference signals corresponding to the QCL type including the Doppler property and the delay property and all the second reference signals corresponding to the QCL type including the Doppler property and the delay property; and determining the Doppler property of the downlink signal according to the first reference signal corresponding to the QCL type including the Doppler property and the delay property; or
determining the delay property of the downlink signal according to the second reference signal corresponding to the QCL type including the Doppler property and the delay property; and determining the Doppler property of the downlink signal according to the first reference signal corresponding to the QCL type including the Doppler property and the delay property.

According to the user equipment in an embodiment of the present application, the first reference signal is a specific reference signal among reference signals corresponding to the QCL type including Doppler property and delay property.

According to the user equipment in an embodiment of the present application, the second reference signal is a reference signal corresponding to the QCL type including Doppler property and delay property.

According to the user equipment in an embodiment of the present application, the first reference signal is a reference signal corresponding to a QCL type being QCL-TypeA, and the second reference signal is a reference signal corresponding to a QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

According to the user equipment in an embodiment of the present application, the QCL configuration information is carried by a set of transmission configuration indication (TCI) states, and the set of TCI states includes any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

According to the user equipment in an embodiment of the present application, the determining the Doppler property of the downlink signal according to the first reference signal, and the determining the delay property of the downlink signal according to the second reference signal, include:
determining the delay property of the downlink signal according to the first reference signal corresponding to the QCL type being QCL-TypeA and the second reference signal corresponding to the QCL type being QCL-TypeE, and determining the Doppler property of the downlink signal according to the first reference signal corresponding to the QCL type being QCL-TypeA; or
determining a time-domain property of the downlink signal according to the second reference signal corresponding to the QCL type being QCL-TypeA, and determining the Doppler property of the downlink signal according to the first reference signal corresponding to the QCL type being QCL-TypeB; or
determining a time-domain property of the downlink signal according to the second reference signal corresponding to the QCL type being QCL-TypeE, and determining the Doppler property of the downlink signal according to the first reference signal corresponding to the QCL type being QCL-TypeB; or
determining the delay property of the downlink signal according to all the first reference signal corresponding to the QCL type being QCL-TypeA and all the second reference signal corresponding to the QCL type being QCL-TypeA, and determining the Doppler property of the downlink signal according to a specific reference signal in the first reference signal corresponding to the QCL type being QCL-TypeA.

According to the user equipment in an embodiment of the present application, the specific reference signal is a reference signal indicated by the network device or a default reference signal.

According to the user equipment in an embodiment of the present application, frequency pre-compensation is performed when the network device transmits the downlink signal; the UE further:
a third receiving unit, configured to receive indication information of the QCL reference signal for the uplink signal; and
a second determining unit, configured to determine a transmitting frequency of the uplink signal according to the indication information, where the uplink signal is an uplink signal used to determine a frequency pre-compensation value for the downlink signal in the network device.

According to the user equipment in an embodiment of the present application, the downlink signal is transmitted through multiple TRPs, frequency pre-compensation is performed at one or more TRPs, and the UE further includes:
a third determining unit, configured to determine, by using the first reference signal, a transmitting frequency of the uplink signal used to calculate the frequency pre-compensation value for the downlink signal at each TRP.

An embodiment of the present application further provides a processor readable storage medium having a computer program stored thereon that causes a processor to perform the steps of the methods for information transmission described above.

In the methods for information transmission, the network device, the UEs and the storage medium, reference signals indicated by the QCL configuration information configured by the network device can be used by all UEs since no Doppler shift pre-compensation need to be performed on the reference signal indicated by the QCL configuration information used to determine the delay property and Doppler property of the downlink signal, the network device does not need to transmit a specific reference signal for each UE, and pilot overhead is saved.

### BRIEF DESCRIPTION OF THE DRAWINGS

In order to more clearly illustrate the solutions disclosed in the embodiments of the present application or the related art, the drawings used in the embodiments or the related art will be briefly described below. The drawings in the following description are only certain embodiments of the present application, and other drawings may be obtained according to these drawings without any creative work for those skilled in the art.
FIG. 1 is a schematic diagram of a deployment scheme of an HST-SFN scenario according to an embodiment of the present application;
FIG. 2 is a schematic flowchart of a method for information transmission according to an embodiment of the present application;
FIG. 3 is a schematic flowchart of another method for information transmission according to an embodiment of the present application;
FIG. 4 is a schematic flowchart of another method for information transmission according to an embodiment of the present application;
FIG. 5 is a schematic flowchart of another method for information transmission according to an embodiment of the present application;
FIG. 6 is a schematic structural diagram of a network device according to an embodiment of the present application;
FIG. 7 is a schematic structural diagram of another network device according to an embodiment of the present application;
FIG. 8 is a schematic structural diagram of user equipment according to an embodiment of the present application; and
FIG. 9 is a schematic structural diagram of another user equipment according to an embodiment of the present application.

### DETAILED DESCRIPTION

In order to more clearly illustrate the objection, solutions and advantages in the embodiments of the present application, the solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application belong to the scope of the present application.

In a traditional high-speed train-single frequency network (HST-SFN) scenario, the UE determines a downlink frequency according to a reference signal in a transmission configuration indication state (TCI state), obtains an uplink frequency based on the downlink frequency, and transmits uplink signals based on one uplink frequency. When the UE is in a moving state, the downlink frequency obtained by the UE includes a downlink Doppler frequency shift (Doppler shift for short), and the uplink Doppler frequency shift is further superimposed when the uplink signal is transmitted. Therefore, during single-point transmission, two times of the Doppler shift exists between the frequency at which the network device receives the uplink signal and the uplink frequency of the network device. During multipoint transmission, the Doppler shifts of the UE is different due to different geographical locations although the downlink frequency of each transmission reception point (TRP) is the same. However, the UE only determines one downlink frequency, and transmits uplink signals based on the downlink frequency. The Doppler shifts experienced by the uplink signal arriving at each TRP are different due to the differences in geographical locations and/or receiving beam directions of each TRP. The network device fails to estimate the Doppler shift experienced by the downlink or uplink, and thus cannot effectively predict the Doppler shift compensation or eliminate Doppler spread since the network device does not know the UE transmits the uplink signals based on which downlink frequency.

In addition, when the number of physical resource blocks (PRBs) allocated to the downlink signal (such as PDSCH) is small, DMRS resource elements (REs) will also be small, and better accuracy may not be obtained when the Doppler property and the delay property estimated by using the DMRS. Therefore, QCL reference signals are configured for PDSCH, that is, different QCL reference signals are configured for UE and the UE can measure the large-scale parameters of PDSCH and DMRS for PDSCH through QCL reference signals, so as to perform better channel estimation. However, the network device configures different QCL reference signals for each UE, which will require a large amount of pilot overhead. In order to reduce the pilot overhead, it is necessary to consider how to use the cell-level QCL reference signal to implement a transmission scheme capable of reducing Doppler spread and enabling the UE to obtain large-scale parameters in both the time domain and frequency domain with high accuracy. Various embodiments of the present application provide corresponding solutions with respect to the above problems, for example, no specific QCL reference signal is transmitted for each UE to save pilot overhead, and for example, Doppler spread is eliminated using frequency compensation to improve the demodulation performance of downlink signals.

The methods and the devices are based on the same disclosed concept, the implementation of the devices and the methods can be referred to each other d since the principles of the methods and the apparatuses are similar, and the repetition will not be repeated.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal and a network device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A wireless terminal can communicate with one or more core networks (CN) via a radio access network (RAN), and the wireless terminal can be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless user equipment may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for the terminal. Depending on the specific application, the base station may also be called an access point, or may be a device in the access network that communicates with wireless terminal through one or more sectors on the air interface, or other names. Network device can be used to exchange received air frames with Internet protocol (IP) packets, and act as a router between wireless terminal and the rest of the access network, and the rest of the access network can include an Internet protocol (IP) communication network. The network devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a home evolved node B (HeNB), a relay node, a femto base station (femto), a pico base station (pico), etc., which are not limited in the embodiments of the present application. In some network structures, a network device may include a centralized unit (CU) node and a distributed unit (DU) node, and the centralized unit and the distributed unit may also be geographically separated.

The solutions in the embodiments of the present application are clearly and completely described in the following with reference to the accompanying drawings in the embodiments of the present application. These embodiments are only a part of the embodiments of the present application, not all of the embodiments. All other embodiments obtained by a person of ordinary skill in the art based on the embodiments of the present application without any creative work fall within the scope of the present application.

FIG. 2 is a schematic flowchart of a method for information transmission according to an embodiment of the present application. As shown in FIG. 2, the method includes the following steps.
step 201, transmitting quasi-co-location (QCL) configuration information of a downlink signal to user equipment (UE), where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the first reference signals include one or more reference signals, and the second reference signal include one or more reference signals.

Before transmitting the downlink signal to the UE, the network device can transmit the QCL configuration information to the UE. The QCL configuration information is the configuration information of the downlink signal. In the present embodiment, the downlink signal includes, but not limited to, PDSCH, physical downlink control channel (PDCCH), DMRS for PDSCH, DMRS for PDCCH, channel state information-reference signal (CSI-RS).

The QCL configuration information indicates at least two reference signals and QCL types corresponding to each reference signal. It should be noted that the QCL types corresponding to each reference signal can be the same or different. When configuring the QCL configuration information, the network device needs to ensure that after receiving the QCL configuration information, the UE can determine the delay property and Doppler property of the downlink signal according to reference signals corresponding to the relevant QCL types in the QCL configuration information.

The QCL configuration information indicates at least two reference signals, which can include a first reference signal and a second reference signal. The first reference signal is configured on the basis that the UE can determine the Doppler property of the downlink signal according to the first reference signal. The second reference signal is configured on the basis that the UE can determine the delay property of the downlink signal according to the second reference signal (including jointly determining the delay property of the downlink signal according to the second reference signal and the first reference signal). In addition, the number of the first reference signals can be one or more, and the number of the second reference signal can be one or more.

In an embodiment of the present application, the Doppler property of the downlink signal refers to the Doppler property of a downlink signal channel, the delay property of the downlink signal refers to the delay property of the downlink signal channel, and the delay property and Doppler property of the downlink signal are those of the downlink signal channel.

The Doppler property include, but not limited to, one or more of the following items: Doppler frequency shift and Doppler spread.

The delay property includes, but not limited to, one or more of the following items: average delay and delay spread.

It should be understood that, in the description of the embodiments of the present application, words such as "first" and "second" are only used for the purpose of distinguishing descriptions, and cannot be understood as indicating or implying relative importance, nor as indicating or implying order. In addition, the term "multiple" refers to two or more than two, and other quantifiers are similar.

The quasi co-location (QCL) involved in the embodiments of the present application is explained as follows.

QCL refers to large-scale parameters of the channel over which a symbol on the antenna port is conveyed can be inferred from large-scale parameters of the channel over which another symbol on another antenna port is conveyed, where the large-scale parameters can include delay spread, average delay, Doppler spread, Doppler delay, average gain and spatial Rx parameters. For example, the traditional 5G new radio (NR) system mainly includes the following four types of QCL, as shown in Table 1 below.

**Table 1**

| Type | Properties | Function |
|---|---|---|
| QCL-TypeA | Doppler shift, Doppler spread, average delay, Doppler spread | To obtain channel estimation information |
| QCL-TypeB | Doppler shift, Doppler spread | To obtain channel estimation information |
| QCL-TypeC | Doppler shift, average delay | To obtain RSRP and other measurement information |
| QCL-TypeD | Space Rx parameter | To assist UE beamforming |

Doppler shift and Doppler spread are Doppler properties, and average delay and delay spread are Delay properties.

Step 202, transmitting the downlink signal to the UE.

After configuring the QCL configuration information of the downlink signal, the network device transmits the downlink signal to the UE, and the UE obtains the downlink signal according to the QCL configuration information.

In the embodiment of the present application, the obtaining the downlink signal includes receiving the downlink signal, and/or detecting and decoding the downlink signal.

In the method for information transmission according to the embodiments of the present application, the UE enables to well estimate the Doppler property and the delay property of the channel, by indicating, to the UE, the reference signal for determining the Doppler property of the channel over which the downlink signal is conveyed and the reference signal for determining delay property of the channel over which the downlink signal is conveyed and the demodulation performance of the UE is improved. Since the reference signal for estimating the Doppler property of the channel over which the downlink signal is conveyed is not exactly the same as the reference signal for estimating the delay property of the channel over which the downlink signal is conveyed, this enables the network device to transmit the two signals in different ways and a cell-level reference signal (one reference signal can be used by multiple UEs at the same time) can be transmitted, which reduces the overhead of reference signals.

Based on the above embodiments, in some embodiments, two schemes for transmitting the downlink signal to the UE in step 202 are provided, as follows.

### Scheme 1:

The downlink signal is transmitted through multiple transmission reception points (TRPs).

The method further includes: transmitting the reference signals to the UE, where the second reference signal is transmitted from a TRP that is different from the TRP used for transmitting the first reference signal among the TRPs used for transmitting the downlink signal.

Before the downlink signal is transmitted to the UE and/or in case that the downlink signal is transmitted to the UE, both the first reference signal and the second reference signal are transmitted to the UE, where the first reference signal and the second reference signal are transmitted through different TRPs, and the used TRPs are selected from multiple TRPs used for transmitting the downlink signal.

In the embodiments of the present application, the term "and/or" describes a related relationship of associated objects, and indicates that there can be three kinds of relationships. For example, A and/or B can represent that A exists alone, A and B exist simultaneously, and B exists alone. Character "j" generally indicates that the associated objects have "or" relationship.

### Scheme 2:

The downlink signal is transmitted through multiple transmission reception points (TRPs).

The method further includes: transmitting the second reference signal simultaneously to the UE by using all TRPs used for transmitting the downlink signal.

Before the downlink signal is transmitted to the UE and/or in case that the downlink signal is transmitted to the UE, both the first reference signal and the second reference signal are transmitted to the UE, where TRPs used by the second reference signal are selected from all TRPs used for transmitting the downlink signal.

Based on the above embodiments, in some embodiments, the QCL types of the first reference signal and the second reference signal are described as follows.

The first reference signal is a reference signal corresponding to the QCL type being QCL-TypeA, and the second reference signal is a reference signal corresponding to the QCL type being QCL-TypeE. The QCL-TypeE represents a QCL type indicating average delay and delay spread, and the QCL-TypeA represents a QCL type indicating Doppler shift, Doppler spread, average delay and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

The embodiment of the present application provides four kinds of QCL configuration information, where the first kind of QCL configuration information indicates that the first reference signal corresponding to the QCL type being QCL-TypeA (the first reference signal can be used to determine the delay property and Doppler property of the downlink signal channel) and a second reference signal corresponding to the QCL type being QCL-TypeE (the second reference signal can be used to determine the delay property of the downlink signal channel). The UE can determine the delay property of the downlink signal according to the first reference signal corresponding to the QCL type being QCL-TypeA and the second reference signal corresponding to the QCL type being QCL-TypeE, and the UE can determine the Doppler property of the downlink signal according to the first reference signal corresponding to the QCL type being QCL-TypeA. It should be noted that the QCL-TypeE is a user-defined QCL type, which represents the QCL type that only indicates the delay property. For example, it is the QCL type indicating the average delay and the delay spread, but in the embodiment of the present application, the QCL type indicating the average delay and the delay spread is not necessarily represented by QCL-TypeE, for example, by QCL-TypeF, QCL-TypeG, etc., which is not limited here.

In the configuration mode of the QCL configuration information, the QCL type of the first reference signal is the QCL type for indicating the Doppler property and the delay property, and the QCL type of the second reference signal is the QCL type for indicating the delay property and the QCL types of the first reference signal and the second reference signal are different. Through the configuration mode of this QCL configuration information, the UE can determine to estimate the Doppler property of the downlink signal using the first reference signal as well as to estimate the delay property of the downlink signal using the second reference signal. The first reference signal can be transmitted at a transmission point where no frequency pre-compensation is performed on the downlink signal, Doppler offset value of the first reference signal is the same as that of the downlink signal and the second reference signal used for delay estimation can be transmitted at other transmission points at which the downlink signal is transmitted. The delay property of the channel for the first reference signal and the delay property of the channel for the second reference signal can be combined to obtain the delay property of the channel for the downlink signal, and channel estimation can be performed on the downlink signal by using both the first reference signal and the second reference signal to ensure the demodulation performance of the downlink signal.

The second kind of QCL configuration information indicates the first reference signal corresponding to the QCL type being QCL-TypeB (the first reference signal including the Doppler property) and the second reference signal corresponding to the QCL type being QCL-TypeA (the second reference signal including both the delay property and the Doppler property). The UE can determine the delay property of the downlink signal according to the second reference signal corresponding to the QCL type being QCL-TypeA, and the UE can determine the Doppler property of the downlink signal according to the first reference signal corresponding to the QCL type being QCL-TypeB.

In the configuration mode of the QCL configuration information, since the QCL type of the first reference signal is the QCL type for indicating the Doppler property, and the QCL type of the second reference signal is the QCL type for indicating the delay property and the Doppler property, the UE can determine which reference signal should be used to estimate the Doppler property and delay property of the channel for the downlink signal based on the QCL types of the reference signals. The UE can determine to estimate the Doppler property of the downlink signal using the first reference signal as well as to estimate the delay property of the downlink signal using the second reference signal. The first reference signal can be transmitted at a transmission point where no frequency pre-compensation is performed on the downlink signal, Doppler offset value of the first reference signal is the same as that of the downlink signal and the second reference signal used for delay estimation can be transmitted at all transmission points at which the downlink signal is transmitted, it has the same delay property as the channel for the downlink signal and channel estimation can be performed on the downlink signal using both the first reference signal and the second reference signal to ensure the demodulation performance of the downlink signal.

The third kind of QCL configuration information indicates the first reference signal corresponding to the QCL type being QCL-TypeB (the first reference signal including the Doppler property) and the second reference signal corresponding to the QCL type being QCL-TypeE (the second reference signal including the delay property). The UE can determine the delay property of the downlink signal according to the second reference signal corresponding to the QCL type being QCL-TypeE, and the UE can determine the Doppler property of the downlink signal according to the first reference signal corresponding to the QCL type being QCL-TypeB .

In the configuration mode of the QCL configuration information, since the QCL type of the first reference signal is the QCL type for indicating the Doppler property, and the QCL type of the second reference signal is the QCL type for indicating the delay property, the UE can understand which reference signal should be used to estimate the Doppler property and delay property of the channel for the downlink signal based on the QCL types of the reference signals. Through the QCL types of the reference signals, the UE can determine to estimate the Doppler property of the downlink signal using the first reference signal as well as to estimate the delay property of the downlink signal using the second reference signal. The first reference signal can be transmitted at a transmission point where no frequency pre-compensation is performed on the downlink signal, Doppler offset value of the first reference signal is the same as that of the downlink signal and the second reference signal used for delay estimation can be transmitted at all transmission points at which the downlink signal is transmitted, it has the same delay property as the channel for the downlink signal and channel estimation can be performed on the downlink signal using both the first reference signal and the second reference signal to ensure the demodulation performance of the downlink signal.

The fourth kind of QCL configuration information indicates the first reference signal and the second reference signal corresponding to the QCL type being QCL-TypeA (both the first reference signal and the second reference signal including the delay property and the Doppler property). The UE can determine the delay property of the downlink signal according to all first reference signal and second reference signal corresponding to the QCL type being QCL-TypeA.

Through the configuration mode of the QCL configuration information, since both the QCL type of the first reference signal and the QCL type of the second reference signal are QCL types for indicating the Doppler property and the delay property, the UE can determine the Doppler property and the delay property of the downlink signal channel by estimating the Doppler property using the first reference signal, estimating the delay property using the second reference signal; or estimating the Doppler property and the delay property using the first reference signal and estimating the delay property using the second reference signal; or estimating Doppler property using the first reference signal, and estimating the Doppler property and the delay property using the second reference signal. Through this mode, the network device can have greater flexibility in the transmission of the reference signals. By the Doppler property and delay property estimated using the first reference signal and the second reference signal, channel estimation can be performed on the downlink signal and the demodulation performance of the downlink signal is improved.

Based on the above embodiments, in some embodiments, the QCL configuration information is carried by a set of transmission configuration indication (TCI) states, and the set of TCI states is any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least one or more first reference signals corresponding to the QCL type being QCL-TypeB, and another TCI state indicating at least the second reference signal corresponding to the QCL type being QCL-TypeE; at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

In the embodiment of the present application, the above four kinds of QCL configuration information is carried by a set of the following TCI states.

For the above-mentioned first kind of QCL configuration information, the set of TCI states includes at least two TCI states, where one TCI state indicates at least the first reference signal corresponding to the QCL type being QCL-TypeA, and the other TCI state indicates at least the second reference signal corresponding to the QCL type being QCL-TypeE. For example, the set of TCI states includes TCI state 1 and TCI state 2, TCI state 1 includes the first reference signal RS1 corresponding to the QCL type being QCL-TypeA, and TCI state 2 includes the second reference signal RS2 corresponding to the QCL type being QCL-TypeE, as shown in Table 2 below.

**Table 2**

| TCI state 1 | TCI state 2 |
|---|---|
| RS1 \| QCL-TypeA | RS2 \| QCL-TypeE |

For the above-mentioned second kind of QCL configuration information, there are two types of set of TCI states, and the following is a first type of set of TCI states.

The set of TCI states includes at least two TCI states, where one TCI state indicates at least the first reference signal corresponding to the QCL type being QCL-TypeB, and the other TCI state indicates at least the second reference signal corresponding to the QCL type being QCL-TypeA. For example, the set of TCI states includes TCI state 1 and TCI state 2, TCI state 1 includes the first reference signal RS1 corresponding to the QCL type being QCL-TypeB, and TCI state 2 includes the second reference signal RS2 corresponding to the QCL type being QCL-TypeA, as shown in Table 3 below.

**Table 3**

| TCI state 1 | TCI state 2 |
|---|---|
| RS1 \| QCL-TypeB | RS2 \| QCL-TypeA |

The following is a second type of set of TCI states:
the set of TCI states includes at least one TCI state, where the TCI state indicates at least the first reference signal corresponding to the QCL type being QCL-TypeB, and the second reference signal corresponding to the QCL type being QCL-TypeA. For example, the set of TCI states includes TCI state 1. TCI state 1 includes the first reference signal RS 1 corresponding to the QCL type being QCL-TypeB and the second reference signal RS2 corresponding to the QCL type being QCL-TypeA, as shown in Table 4 below.

**Table 4**

| TCI state 1 |
|---|
| RS1 \| QCL-TypeB |
| RS2 \| QCL-TypeA |

For the above-mentioned third kind of QCL configuration information, there are two types of set of TCI states, and the following is the first type of set of TCI states:
the set of TCI states includes at least two TCI states, where one TCI state indicates at least the first reference signal corresponding to the QCL type being QCL-TypeB, and the other TCI state indicates at least the second reference signal corresponding to the QCL type being QCL-TypeE. For example, the set of TCI states includes TCI state 1 and TCI state 2, TCI state 1 includes the first reference signal RS1 corresponding to the QCL type being QCL-TypeB, and TCI state 2 includes the second reference signal RS2 corresponding to the QCL type being QCL-TypeE, as shown in Table 5 below.

**Table 5**

| TCI state 1 | TCI state 2 |
|---|---|
| RS1 \| QCL-TypeB | RS2 \| QCL-TypeE |

The following is the second type of set of TCI states:
the set of TCI states includes at least one TCI state, where the TCI state indicates at least the first reference signal corresponding to the QCL type being QCL-TypeB, and the second reference signal corresponding to the QCL type being QCL-TypeE. For example, the set of TCI states includes TCI state 1. TCI state 1 includes the first reference signal RS 1 corresponding to the QCL type being QCL-TypeB and the second reference signal RS2 corresponding to the QCL type being QCL-TypeE, as shown in Table 6 below.

**Table 6**

| TCI state 1 |
|---|
| RS1 \| QCL-TypeB |
| RS2 \| QCL-TypeE |

For the above-mentioned fourth kind of QCL configuration information, there are three types of set of TCI states, and the following is the first type of set of TCI states.
the set of TCI states includes at least two TCI states, where one TCI state indicates at least the first reference signal corresponding to the QCL type being QCL-TypeA, and the other TCI state indicates at least the second reference signal corresponding to the QCL type being QCL-TypeA. For example, the set of TCI states includes TCI state 1 and TCI state 2, TCI state 1 includes the first reference signal RS 1 corresponding to the QCL type being QCL-TypeA, and TCI state 2 includes the second reference signal RS2 corresponding to the QCL type being QCL-TypeA, as shown in Table 7 below.

**Table 7**

| TCI state 1 | TCI state 2 |
|---|---|
| RS1 \| QCL-TypeA | RS2 \| QCL-TypeA |

The following is a second type of set of TCI states:
the set of TCI states includes at least one TCI state, where the TCI state indicates at least the first reference signal corresponding to the QCL type being QCL-TypeA, and the second reference signal corresponding to the QCL type being QCL-TypeA. For example, the set of TCI states includes TCI state 1. TCI state 1 includes the first reference signal RS 1 corresponding to the QCL type being QCL-TypeA and the second reference signal RS2 corresponding to the QCL type being QCL-TypeA, as shown in Table 8 below.

**Table 8**

| TCI state 1 |
|---|
| RS1 \| QCL-TypeA |
| RS2 \| QCL-TypeA |

The following is a third type of set of TCI states.
the set of TCI states includes at least one TCI state, where the TCI state indicates at least two reference signals corresponding to the QCL type being QCL-TypeA. For example, the set of TCI states includes TCI state 1. TCI state 1 includes two reference signals corresponding to the QCL type being QCL-TypeA, such as the first reference signal RS1 and the second reference signal RS2, as shown in Table 9 below.

**Table 9**

| TCI state 1 |
|---|
| RS 1, RS 2 \| QCL-TypeA |

It should be noted that, in the embodiment of the present application, by configuring the above four different types of QCL configuration information, the UE can obtain accurate delay property and Doppler property of the downlink signal.

Based on the above embodiments, in some embodiments, the downlink signal is transmitted by multiple TRPs, that is, the network device transmits the downlink signal through multiple TRPs. Before transmitting downlink signals to the UE, the method further includes any of the following steps:
determining a frequency offset value of an uplink signal at a first TRP, and determining a frequency compensation value of the downlink signal at a second TRP according to the frequency offset value at the first TRP, where the first TRP is a TRP selected by the network device, the second TRP is one or more TRPs other than the first TRP;
determining a frequency offset value of the uplink signal at a third TRP in a reference beam direction, determining a frequency compensation value of the downlink signal at the third TRP according to the frequency offset value at the third TRP, and determining the frequency compensation value at the third TRP as a frequency compensation value at a fourth TRP in the reference beam direction, where the third TRP is a TRP in the reference beam direction, and the fourth TRP is one or more TRPs other than the third TRP in the reference beam direction;
determining one frequency offset value according to a signal received by a fifth TRP in the reference beam direction based on the uplink signal, and determining a frequency compensation value of a sixth TRP in the reference beam direction according to the frequency offset value, where the fifth TRP is a group of TRPs in the reference beam direction, and the sixth TRP is one or more TRPs other than the fifth TRP in the reference beam direction; and
determining one frequency offset value according to a signal received by all TRPs in the reference beam direction based on the uplink signal, and determining a frequency compensation value at a seventh TRP in another beam direction according to the frequency offset value, where the seventh TRP is one or more TRPs in a beam direction other than the reference beam direction.

The transmitting the downlink signal to the UE includes:
transmitting the downlink signal to the UE according to the frequency compensation value.

In an embodiment, the downlink frequency is adjusted at the TRP by using the frequency compensation value to obtain an adjusted frequency, and the downlink signal is transmitted at the adjusted frequency.

In an embodiment, the above frequency offset value is a Doppler offset value obtained after performing channel estimation on the uplink signal.

In an embodiment, the transmitting the downlink signal to the UE according to the frequency offset value includes: adjusting the center frequency of the downlink signal by using the frequency offset value, and transmitting the downlink signal at the adjusted frequency. For example, in an embodiment, at each TRP, the center frequency of the downlink signal is adjusted based on the frequency offset value at the TRP, and the downlink signal is transmitted at the adjusted frequency.

In an embodiment, the transmitting the downlink signal to the UE according to the frequency offset value includes: transmitting the downlink signal after increasing or decreasing a transmitting frequency for the downlink signal with respect to a frequency determined according to the downlink frequency by the frequency offset value. For example, for each TRP, the downlink signal is transmitted after a transmitting frequency for the downlink signal is increased or decreased with respect to a frequency determined according to the downlink frequency by the frequency offset value.

In the above methods, a frequency offset value can be determined according to the uplink signal received at multiple TRPs by the following ways.

Way 1: the network device performs channel estimation using the same uplink signal received by these TRPs, and estimates Doppler shift by using the channel estimation result, and the Doppler shift is the frequency offset value.

Way 2: the network device performs channel estimation using the uplink signal received by each of these TRPs respectively, calculates a Doppler shift value using the channel estimation result of each TRP respectively, and performs weighted average on these multiple Doppler shift values based on a receiving strength of the uplink signal and regards the result after weighted average as the frequency offset value.

In the embodiment of the present application, one TRP in a beam direction refers to one TRP with a beam directed toward the beam direction. In an embodiment, a TRP in the beam direction refers to a TRP whose beam directed to a certain side of the TRP (for example, all TRPs whose beams are directed to the right of the TRP are TRPs in a beam direction, and all TRPs whose beams are directed to the left of the TRP are TRPs in the other beam direction).

Based on the above embodiments, in some embodiments, the determining a frequency compensation value of the downlink signal at the second TRP according to the frequency offset value at the first TRP includes:
obtaining a difference between the frequency offset value at the first TRP and an obtained frequency offset value at the second TRP;
determining, in case that a frequency compensation value of the first TRP is 0, or no adjustment is performed on a downlink frequency of the downlink signal at the first TRP, that the frequency compensation value at the second TRP is the difference; or
determining, in case that the frequency compensation value of the first TRP is Δ*f*₁, that the frequency compensation value at the second TRP is a sum of the difference and Δ*f*₁, where Δ*f*₁ is not 0.

It can be understood that, if the frequency compensation value of the first TRP is 0, no Doppler compensation is performed at the first TRP.

Based on the above embodiments, in some embodiments, the method further includes: after determining the frequency offset value of the uplink signal at the third TRP in the direction of the reference beam,
determining frequency compensation values at each TRP in another beam direction according to the frequency offset value at the third TRP.

The determining frequency compensation values at each TRP in another beam direction according to the frequency offset value at the third TRP, includes:
obtaining a difference between the frequency offset value at the third TRP and a frequency offset value at an eighth TRP, where the eighth TRP is one or more TRPs in a beam direction other than the reference beam direction;
determining, in case that the frequency compensation value of the third TRP is 0, or no adjustment is performed on a downlink frequency of the downlink signal at the third TRP, that frequency compensation values at all TRPs in a beam direction where the eighth TRP is located are the difference; or
determining, in case that the frequency compensation value of the third TRP is Δ*f*₂, the frequency compensation values at all TRPs in a beam direction where the eighth TRP is located are a sum of the difference and Δ*f*₂, where Δ*f*₂ is not 0.

In an embodiment, the eighth TRP is all TRPs other than the TRP in the beam direction where the third TRP is located.

Based on the above embodiments, in some embodiments, after determining one frequency offset value according to a signal received by a fifth TRP in the reference beam direction based on the uplink signal, the method further includes:
determining frequency compensation values at each TRP in another beam direction according to the frequency offset value.

The determining frequency compensation values at each TRP in another beam direction according to the frequency offset value, includes:
obtaining a difference between the frequency offset value at the fifth TRP and a frequency offset value at a ninth TRP, where the ninth TRP is one or more TRPs in a beam direction other than the reference beam direction;
determining, in case that the frequency compensation value at the fifth TRP is 0, or no adjustment is performed on a downlink frequency of the downlink signal at the fifth TRP, that frequency compensation values at all TRPs in a beam direction where the ninth TRP is located are the difference; and
determining, in case that the frequency compensation value at the fifth TRP is Δ*f*₂, that the frequency compensation values at all TRPs in a beam direction where the ninth TRP is located are a sum of the difference and Δ*f*₂, where Δ*f*₂ is not 0.

Based on the above embodiments, in some embodiments, after determining one frequency offset value according to a signal received by a fifth TRP in the reference beam direction based on the uplink signal, the method further includes:
determining frequency compensation values at each TRP in another beam direction according to the frequency offset value.

The determining frequency compensation values at each TRP in another beam direction according to the frequency offset value, includes:
obtaining a difference between the frequency offset value and a frequency offset value in a first beam direction, where the first beam direction is a beam direction other than the reference beam direction;
determining, in case that the frequency offset value is 0, or no adjustment is performed on a downlink frequency of the downlink signal at all the TRPs in the reference beam direction, that frequency compensation values at all TRPs in a beam direction are the difference; and
determining, in case that the frequency compensation value in the reference beam direction is Δ*f*₃, that the frequency compensation values at all TRPs in the first beam direction are a sum of the difference and Δ*f*₃, where Δ*f*₃ is not 0.

Based on the above embodiments, in some embodiments, the first reference signal and the second reference signal in the four kinds of the QCL configuration information are transmitted by the following modes:
in case that the QCL configuration information indicates a first reference signal corresponding to the QCL type being QCL-TypeA and a second reference signal corresponding to the QCL type being QCL-TypeE, transmitting the first reference signal corresponding to the QCL type being QCL-TypeA through the first TRP, and transmitting the second reference signal corresponding to the QCL type being QCL-TypeE through one or more second TRPs;
in case that the QCL configuration information indicates a first reference signal corresponding to the QCL type being QCL-TypeB and a second reference signal corresponding to the QCL type being QCL-TypeA, transmitting the first reference signal corresponding to the QCL type being QCL-TypeB through the first TRP, and transmitting the second reference signal corresponding to the QCL type being QCL-TypeA through one or more second TRPs;
in case that the QCL configuration information indicates a first reference signal corresponding to the QCL type being QCL-TypeB and a second reference signal corresponding to the QCL type being QCL-TypeE, transmitting the first reference signal corresponding to the QCL type being QCL-TypeB through the first TRP, and transmitting the second reference signal corresponding to the QCL type being QCL-TypeE through one or more second TRPs; and
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through the first TRP, and transmitting the second reference signal corresponding to the QCL type being QCL-TypeA through one or more second TRPs.

The first reference signal and the second reference signal in each kind of QCL configuration information can be transmitted by four modes, that is, there are 16 transmission modes in total.

The first reference signal and the second reference signal in the first kind of QCL configuration information are transmitted by the following four modes:
in case that the QCL configuration information indicates a first reference signal corresponding to the QCL type being QCL-TypeA and one or more second reference signals corresponding to the QCL type being QCL-TypeE, transmitting the first reference signal corresponding to the QCL type being QCL-TypeA through the first TRP, and transmitting the second reference signal corresponding to the QCL type being QCL-TypeE through one or more second TRPs;
in case that the QCL configuration information indicates a first reference signal corresponding to the QCL type being QCL-TypeA and one or more second reference signals corresponding to the QCL type being QCL-TypeE, transmitting the first reference signal corresponding to the QCL type being QCL-TypeA through the first TRP, and transmitting the second reference signal corresponding to the QCL type being QCL-TypeE through one or more second TRPs;
in case that the QCL configuration information indicates a first reference signal corresponding to the QCL type being QCL-TypeA and one or more second reference signals corresponding to the QCL type being QCL-TypeE, transmitting the first reference signal corresponding to the QCL type being QCL-TypeA through a TRP in the reference beam direction, and transmitting the second reference signal corresponding to the QCL type being QCL-TypeE through TRPs in one or more beam directions other than the reference beam direction; and
in case that the QCL configuration information indicates a first reference signal corresponding to the QCL type being QCL-TypeA and one or more second reference signals corresponding to the QCL type being QCL-TypeE, transmitting the first reference signal corresponding to the QCL type being QCL-TypeA through a TRP in the reference beam direction, and transmitting the second reference signal corresponding to the QCL type being QCL-TypeE through TRPs in all beam directions.

The first reference signal and the second reference signal in the second kind of QCL configuration information are transmitted by the following four modes:
in case that the QCL configuration information indicates one or more first reference signals corresponding to the QCL type being QCL-TypeB and one second reference signal corresponding to the QCL type being QCL-TypeA, transmitting the first reference signal corresponding to the QCL type being QCL-TypeB through the first TRP, and transmitting the second reference signal corresponding to the QCL type being QCL-TypeA through one or more second TRPs;
in case that the QCL configuration information indicates one or more first reference signals corresponding to the QCL type being QCL-TypeB and one second reference signal corresponding to the QCL type being QCL-TypeA, transmitting the first reference signal corresponding to the QCL type being QCL-TypeB through the first TRP, and transmitting the second reference signal corresponding to the QCL type being QCL-TypeA through all TRPs;
in case that the QCL configuration information indicates one or more first reference signals corresponding to the QCL type being QCL-TypeB and one second reference signal corresponding to the QCL type being QCL-TypeA, transmitting the first reference signal corresponding to the QCL type being QCL-TypeB through a TRP in the reference beam direction, and transmitting the second reference signal corresponding to the QCL type being QCL-TypeA through TRPs in one or more beam directions other than the reference beam direction; and
in case that the QCL configuration information indicates one or more first reference signals corresponding to the QCL type being QCL-TypeB and one second reference signal corresponding to the QCL type being QCL-TypeA, transmitting the first reference signal corresponding to the QCL type being QCL-TypeB through a TRP in the reference beam direction, and transmitting the second reference signal corresponding to the QCL type being QCL-TypeA through TRPs in all beam directions.

The first reference signal and the second reference signal in the third kind of QCL configuration information are transmitted by the following four modes:
in case that the QCL configuration information indicates one or more first reference signals corresponding to the QCL type being QCL-TypeB and one or more second reference signals corresponding to the QCL type being QCL-TypeE, transmitting the first reference signal corresponding to the QCL type being QCL-TypeB through the first TRP, and transmitting the second reference signal corresponding to the QCL type being QCL-TypeE through one or more second TRPs;
in case that the QCL configuration information indicates one or more first reference signals corresponding to the QCL type being QCL-TypeB and one or more second reference signals corresponding to the QCL type being QCL-TypeE, transmitting the first reference signal corresponding to the QCL type being QCL-TypeB through the first TRP, and transmitting the second reference signal corresponding to the QCL type being QCL-TypeE through all TRPs;
in case that the QCL configuration information indicates one or more first reference signals corresponding to the QCL type being QCL-TypeB and one or more second reference signals corresponding to the QCL type being QCL-TypeE, transmitting the first reference signal corresponding to the QCL type being QCL-TypeB through a TRP in the reference beam direction, and transmitting the second reference signal corresponding to the QCL type being QCL-TypeE through TRPs in one or more beam directions other than the reference beam direction; and
in case that the QCL configuration information indicates one or more first reference signals corresponding to the QCL type being QCL-TypeB and one or more second reference signals corresponding to the QCL type being QCL-TypeE, transmitting the first reference signal corresponding to the QCL type being QCL-TypeB through a TRP in the reference beam direction, and transmitting the second reference signal corresponding to the QCL type being QCL-TypeE through TRPs in all beam directions.

The first reference signal and the second reference signal in the fourth kind of QCL configuration information are transmitted by the following four modes:
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through the first TRP, and transmitting the second reference signal corresponding to the QCL type being QCL-TypeA through one or more second TRPs;
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through the first TRP, and transmitting the second reference signal corresponding to the QCL type being QCL-TypeA through all TRPs;
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through a TRP in the reference beam direction, and transmitting the second reference signal corresponding to the QCL type being QCL-TypeA through TRPs in one or more beam directions other than the reference beam direction; and
in case that the QCL configuration information indicates a first reference signals corresponding to the QCL type being QCL-TypeA and a second reference signal corresponding to the QCL type being QCL-TypeA, transmitting the first reference signal corresponding to the QCL type being QCL-TypeA through a TRP in the reference beam direction, and transmitting the second reference signal corresponding to the QCL type being QCL-TypeA through TRPs in all beam directions.

Based on the above embodiments, in some embodiments, the method further includes:
transmitting indication information of a QCL reference signal for the uplink signal to the UE, where the QCL reference signal is used for indicating a reference signal for determining the transmission frequency of the uplink signal, where the QCL reference signal is a signal in the first reference signal.

In an embodiment, the QCL reference signal is used for indicating a reference signal for determining the transmission frequency of the uplink signal, for the network device performing Doppler pre-compensation on the downlink signals from each TRP.

The uplink signal may be all uplink signals.

Alternatively, the uplink signal is an uplink signal used for the network device performing frequency offset values (Doppler shift) at multiple TRPs. The network device may further determine the frequency pre-compensation value of the downlink signal according to the frequency offset values.

By indicating, to the UE, reference signals used to determine a transmission frequency of the uplink signal for the frequency pre-compensation value of the downlink signal, the UE can determine the downlink frequency and/or the transmission frequency of the uplink signal based on the reference signal. Therefore, the network device can better determine how to perform pre-compensation at each TRP. For example, no frequency pre-compensation of the downlink signal is performed on the TRP that transmits the first reference signal, and the frequency pre-compensation of the downlink signal is performed on other TRPs.

In some embodiments, the method further includes:
transmitting TCI state indication information to the UE, where the TCI state indication information is used for indicating a TCI state corresponding to the first reference signal; or
transmitting sequence number indication information to the UE, where the sequence number indication information is used for indicating sequence numbers of the first reference signal among all QCL-TypeA reference signals indicated by TCI states associated with the downlink signal.

In the embodiment of the present application, the Doppler shifts of the downlink signal arriving at the UE from each TRP are basically the same when the downlink signal is transmitted from multiple TRPs, and thus large Doppler shift from a positive path of some TRPs and large Doppler shift from a negative path of some TRPs are avoided, the Doppler spread is eliminated well and the demodulation performance of the downlink signal is improved.

Since no Doppler pre-compensation is performed on the reference signal used b to determine the Doppler property and the delay property of the downlink signal, a reference signal transmitted by the network device can be used by all UEs. Therefore, no specific reference signal for each UE is required to be transmitted, which saves reference signal overhead, that is, saves pilot overhead. In addition, through the method for configuring the reference signal and the schemes for the UE to determine the Doppler property and delay property of the downlink signal in the embodiments of the present application, the UE can obtain relatively accurate delay property and Doppler property, and performance of downlink transmission in high-speed mobile scenarios is improved.

The above describes the method for information transmission of the embodiment of the present application from the network device side, and the following describes the method for information transmission of the embodiment of the present application from the UE side.

FIG. 3 is a schematic flowchart of a method for information transmission according to an embodiment of the present application. As shown in FIG. 3, the method includes the following steps:
step 301, receiving QCL configuration information of a downlink signal, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more.

Before transmitting the downlink signal to the UE, the network device configures QCL configuration information. The QCL configuration information is the configuration information of the downlink signal. The downlink signal includes, but not limited to, PDSCH, PDCCH, DMRS for PDSCH, DMRS for PDCCH, CSI-RS. After the configuration is completed, the network device transmits the quasi-co-location (QCL) configuration information of the downlink signal to the UE, and the UE receives the QCL configuration information of the downlink signal.

The QCL configuration information indicates at least two reference signals and QCL types corresponding to each reference signal. It should be noted that the QCL types corresponding to each reference signal can be the same or different. When configuring the QCL configuration information, the network device needs to ensure that after receiving the QCL configuration information, the UE can determine the delay property and Doppler property of the downlink signal according to reference signals corresponding to the relevant QCL types in the QCL configuration information.

The QCL configuration information indicates at least two reference signals, which can include a first reference signal and a second reference signal. The first reference signal is configured on the basis that the UE can determine the Doppler property of the downlink signal according to the first reference signal. The second reference signal is configured on the basis that the UE can determine the delay property of the downlink signal according to the second reference signal (including jointly determining the delay property of the downlink signal according to the second reference signal and the first reference signal). In addition, the number of the first reference signals can be one or more, and the number of the second reference signal can also be one or more.

Step 302, obtaining the downlink signal according to the QCL configuration information.

After receiving the QCL configuration information of the downlink signal, the UE obtains the downlink signal according to the QCL configuration information.

In the method for information transmission according to the embodiments of the present application, by using the above QCL configuration information, the UE can obtain accurate delay property and Doppler property of the downlink signal, and thus the performance of downlink transmission in high-speed mobile scenarios is improved.

In the method for information transmission according to the embodiments of the present application, the obtaining the downlink signal includes receiving the downlink signal, and/or detecting and decoding the downlink signal.

Based on the above embodiments, in some embodiments, obtaining the downlink signal according to the QCL configuration information in step 302 includes:
determining the Doppler property of the downlink signal according to the first reference signal;
determining the delay property of the downlink signal according to the second reference signal; and
obtaining the downlink signal according to the Doppler property and the delay property.

Based on the above embodiments, in some embodiments, the obtaining the delay property of the downlink signal according to the second reference signal includes:
determining the delay property of the downlink signal according to both the first reference signal and the second reference signal.

It should be noted that the UE may determine the delay property of the downlink signal only according to the second reference signal, or may determine the delay property of the downlink signal jointly according to the first reference signal and the second reference signal.

Based on the above embodiments, in some embodiments, before obtaining the downlink signal according to the Doppler property and the delay property, the method further includes:
receiving the reference signals transmitted by the network device, where the second reference signal is transmitted from a TRP that is different from the TRP transmitting the first reference signal among the TRPs used for transmitting the downlink signal.

Based on the above embodiments, in some embodiments, before obtaining the downlink signal according to the Doppler property and the delay property, the method further includes:
receiving the first reference signal and the second reference signal transmitted by the network device, where the second reference signal is transmitted from all TRPs used for transmitting the downlink signal.

Based on the above embodiments, in some embodiments, the determining the Doppler property of the downlink signal according to the first reference signal, and the determining the delay property of the downlink signal according to the second reference signal, include:
determining the Doppler property of the downlink signal according to the first reference signal corresponding to the QCL type including both the Doppler property and the delay property; and determining the delay property of the downlink signal according to the first reference signal corresponding to the QCL type only including the delay property and the second reference signal corresponding to the QCL type including the delay property; or
determining the Doppler property of the downlink signal according to the first reference signal corresponding to the QCL type only including the Doppler property; and determining the delay property of the downlink signal according to the second reference signal corresponding to the QCL type only including the delay property; or
determining the Doppler property of the downlink signal according to the first reference signal corresponding to the QCL type only including the Doppler property; and determining the delay property of the downlink signal according to the second reference signal corresponding to the QCL type including the Doppler property and the delay property; or
determining the delay property of the downlink signal according to all the first reference signals corresponding to the QCL type including the Doppler property and the delay property and all the second reference signals corresponding to the QCL type including the Doppler property and the delay property; and determining the Doppler property of the downlink signal according to the first reference signal corresponding to the QCL type including the Doppler property and the delay property; or
determining the delay property of the downlink signal according to the second reference signal corresponding to the QCL type including the Doppler property and the delay property; and determining the Doppler property of the downlink signal according to the first reference signal corresponding to the QCL type including the Doppler property and the delay property.

In an embodiment, the first reference signal is a specific reference signal among reference signals corresponding to the QCL type including Doppler property and delay property.

In an embodiment, the second reference signal is a reference signal corresponding to the QCL type including Doppler property and delay property.

In an embodiment, the second reference signal is all reference signals corresponding to the QCL type including Doppler property and delay property.

In an embodiment, the specific reference signal is:
a reference signal indicated by the network device; or
a default reference signal.

The reference signal indicated by the network device can be:
a reference signal corresponding to which specific QCL type (for example, the specific QCL type being QCL-TypeA) in the TCI state indicated directly by the network device in case of only one TCI state; or
a reference signal corresponding to a specific QCL type (for example, the specific QCL type being QCL-TypeA) in the TCI state indicated by the network device in case of multiple TCI states, where the network device indicates the TCI state where the specific reference signal is located, (for example, the network device indicates the UE to determine the Doppler property of the downlink signal using the reference signal corresponding to the QCL-TypeA in the first TCI state and then the UE determines the Doppler property of the downlink signal using the reference signal corresponding to the QCL-TypeA in a first TCI state; for another example, the network device indicates the UE to determine the Doppler property of the downlink signal using the reference signal corresponding to the QCL-TypeA in a second TCI state and then the UE determines the Doppler property of the downlink signal using the reference signal corresponding to the QCL-TypeA in the second TCI state; or
a reference signal corresponding to the specific QCL type indicated by the network device (for example, the specific QCL type being QCL-TypeA) in the TCI states in case of multiple TCI states, where the network device indicates a TRP corresponding to the specific reference signal, etc.; or
a reference signal corresponding to the QCL type indicated by the network device (for example, the QCL type being QCL-TypeA) of which the time-domain property is ignored; or
a reference signal indicated by the network device corresponding to the QCL type (for example, the QCL type being QCL-TypeA) of which the frequency-domain property is not ignored.

The default reference signal can be:
a reference signal corresponding to the specific QCL type (for example, the specific QCL type being QCL-TypeA) in the TCI state among multiple TCI states, indicated by the network device; or
a reference signal corresponding to the specific QCL type (for example, the QCL type being QCL-TypeA) with a specific sequence number agreed between the network device and the UE in case of one TCI state (for example, the reference signal of the first QCL-TypeA in the TCI state; for another example, for example, the reference signal of the second QCL-TypeA in TCI state); or
a reference signal corresponding to the QCL type (for example, the QCL type being QCL-TypeA) of which the time-domain property is ignored agreed between the network device and the LTE; or
a reference signal corresponding to the QCL type (for example, the QCL type being QCL-TypeA) of which the frequency-domain property is not ignored agreed between the network device and the UE.

In an embodiment, the behavior performed by the UE includes: receiving TCI state indication information transmitted by the base station, and determining the first reference signal according to the TCI state indication information, where the TCI state indication information is used for indicating a TCI state where the first reference signal is located.

In an embodiment, the behavior performed by the UE includes: receiving sequence number indication information transmitted by the base station, and determining the first reference signal according to the sequence number indication information, where the sequence number indication information is used for indicating a sequence number of the first reference signal among the TCI state associated with the downlink signal. In an embodiment, the sequence number indication information is used for indicating the sequence numbers of the first reference signal among all QCL-TypeA reference signals indicated by TCI states associated with the downlink signal.

In an embodiment, the behavior performed by the network device includes: transmitting TCI state indication information to the UE, where the TCI state indication information is used for indicating the TCI state corresponding to the first reference signal.

In an embodiment, the behavior performed by the network device includes: transmitting sequence number indication information to the UE, where the sequence number indication information is used for indicating the sequence numbers of the first reference signal among all QCL-TypeA reference signals indicated by TCI states associated with the downlink signal.

The description is made by taking the QCL type corresponding to a specific signal being QCL-TypeA as an example.

In an embodiment, the specific reference signal corresponding to QCL-TypeA is:
a reference signal indicated by the network device; or
a default reference signal.

The reference signal indicated by the network device can be:
a reference signal corresponding to which QCL-typeA in the TCI state indicated directly by the network device in case of only one TCI state; or
a reference signal corresponding to QCL-typeA in the specific TCI state indicated by the network device in case of multiple TCI states (for example, the network device indicates the UE to determine the Doppler property of the downlink signal using the reference signal corresponding to QCL-TypeA in the first TCI state and the UE determines the Doppler property of the downlink signal using the reference signal corresponding to QCL-TypeA in the first TCI state); or
a reference signal corresponding to QCL-typeA for TRP indicated by the network device in case of multiple TCI states; or
a reference signal corresponding to the QCL-TypeA indicated by the network device of which the time-domain property is ignored; or
a reference signal corresponding to the QCL-TypeA indicated by the network device of which the frequency-domain property is not ignored.

The default reference signal can be:
a reference signal corresponding to the QCL-TypeA in the specific TCI state agreed between the network device and the LTE in case of multiple TCI states; or
a reference signal (for example, a reference signal corresponding to the first QCL-TypeA in the TCI states) corresponding to the specific QCL-TypeA agreed between the network device and the LTE in case of the multiple TCI states; or
a reference signal corresponding to the QCL-TypeA of which the time-domain property is ignored agreed between the network device and the LTE; or
a reference signal corresponding to the QCL-TypeA of which the frequency-domain property is not ignored agreed between the network device and the UE.

Based on the above embodiments, in some embodiments, the first reference signal is a reference signal corresponding to the QCL type being QCL-TypeA, and the second reference signal is a reference signal corresponding to the QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

Based on the above embodiments, in some embodiments, the QCL configuration information is carried by a set of transmission configuration indication (TCI) states, and the set of TCI states is one of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

The QCL-TypeE represents a QCL type indicating average delay and delay spread, the QCL-TypeA represents a QCL type indicating Doppler shift, Doppler spread, average delay and delay spread; and the QCL-TypeB represents a QCL type indicating Doppler shift and Doppler spread.

Based on the above embodiments, in some embodiments, the determining the Doppler property of the downlink signal according to the first reference signal, and the determining the delay property of the downlink signal according to the second reference signal, include:
determining the delay property of the downlink signal according to the first reference signal corresponding to the QCL type being QCL-TypeA and the second reference signal corresponding to the QCL type being QCL-TypeE, and determining the Doppler property of the downlink signal according to the first reference signal corresponding to the QCL type being QCL-TypeA; or
determining a time-domain property of the downlink signal according to the second reference signal corresponding to the QCL type being QCL-TypeA, and determining the Doppler property of the downlink signal according to the first reference signal corresponding to the QCL type being QCL-TypeB; or
determining a time-domain property of the downlink signal according to the second reference signal corresponding to the QCL type being QCL-TypeE, and determining the Doppler property of the downlink signal according to the first reference signal corresponding to the QCL type being QCL-TypeB; or
determining the delay property of the downlink signal according to all the first reference signal corresponding to the QCL type being QCL-TypeA and all the second reference signal corresponding to the QCL type being QCL-TypeA, and determining the Doppler property of the downlink signal according to a specific reference signal in the first reference signal corresponding to the QCL type being QCL-TypeA.

Relevant descriptions of the specific reference signal may refer to the foregoing embodiments, and details are not repeated here.

Based on the above embodiments, in some embodiments, the network device performs frequency pre-compensation when transmitting the downlink signal; the method further includes:
receiving indication information of the QCL reference signal for the uplink signal; and
determining a transmitting frequency of the uplink signal according to the indication information, where the uplink signal is an uplink signal used to determine a frequency pre-compensation value for the downlink signal in the network device.

In an embodiment, the QCL reference signal is used for indicating a reference signal for determining the transmission frequency of the uplink signal, and the network device performs Doppler pre-compensation on the downlink signals from each TRP. The QCL reference signal is a signal in the first reference signal.

Based on the above embodiments, in some embodiments, the downlink signal is transmitted through multiple TRPs, frequency pre-compensation is performed at one or more TRPs, and the method further includes:
determining, by using the first reference signal, a transmitting frequency of the uplink signal used to calculate the frequency pre-compensation value for the downlink signal at each TRP

Based on the above embodiments, in some embodiments, the downlink signal is transmitted through multiple TRPs obtaining the downlink signal according to the QCL configuration information includes:
receiving a downlink signal transmitted by multiple TRPs at an adjusted frequency according to the QCL configuration information, where the adjusted frequency is a frequency obtained by the network device adjusting the downlink frequency at the TRP based on the determined frequency compensation value.

The method for information transmission for the above four QCL configuration information is described as follows.

It should be understood that although the following examples are described by taking the network device transmits the downlink signal mostly using two TRPs as an example, the method in the embodiment of the present application is not limited to the scenario of two TRPs, but further includes the case of three or more TRPs.

For the above-mentioned first kind of QCL configuration information, the following are basic procedures.

Step 1, the UE transmits an uplink reference signal (UL RS). It can also be an uplink signal. In a word, it is enough for the network side to measure a frequency offset at each TRP with respect to the uplink frequency.

Step 2, multiple TRPs on the network side simultaneously receive the UL RS transmitted by the UE, and determine the frequency offset with respect to the uplink frequency on the base station side.

Step 3, the network side transmits PDSCH, DMRS for PDSCH and QCL reference signals for them.

When transmission of PDSCH and DMRS for PDSCH is performed, no Doppler pre-compensation is performed on DMRS for PDSCH and PDSCH at a TRP (assuming that the TRP is the reference TRP), that is, the downlink frequency on the network side is used for transmission, and at other TRPs (may be called as the target TRP), Doppler pre-compensation is performed on PDSCH and DMRS for PDSCH and performs transmission.

In an embodiment, the network side determines a difference between the Doppler pre-compensation values at any two TRPs used for transmitting PDSCH and DMRS for PDSCH as a difference between the Doppler offset values detected by the network side at the two TRPs. In an embodiment, the Doppler pre-compensation value at any target TRP is a difference between a Doppler offset value detected by the network side at the reference TRP and a Doppler offset value detected by the network side at the TRP (for example, subtracting the Doppler offset value detected by the network side at the TRP from the Doppler offset value detected by the network side at the reference TRP); or
when transmitting PDSCH and DMRS FOR PDSCH, the network side performs no Doppler pre-compensation at TRPs in the same beam direction (maybe called as the reference beam direction), that is, transmits using the downlink frequency on the network side and then performs pre-compensation at other TRPs (may be called as the target TRPs) and performs transmission.

In an embodiment, the Doppler pre-compensation value at any target TRP is a difference between a Doppler offset value detected by the network side at one reference TRP and a Doppler offset value detected by the network side at the target TRP (for example, subtracting the Doppler offset value detected by the network side at the target TRP from the Doppler offset value detected by the network side at one reference TRP).

In an embodiment, the Doppler pre-compensation value at any target TRP is a difference between a Doppler offset value detected by the network side at a TRP in a reference beam direction and a Doppler offset value detected by the network side in a beam direction where the target TRP is located (for example, subtracting the Doppler offset value detected by the network side in a beam direction where the target TRP is located from the Doppler offset value detected by the network side at the TRP in a reference beam direction). In an embodiment, the network side detects a Doppler offset value using any TRP in the reference beam direction, and regards the Doppler offset value as a Doppler offset value detected by the TRP in the reference beam direction. In an embodiment, the network side detects a Doppler offset value using a TRP with a maximum uplink signal received power in the reference beam direction, and uses the Doppler offset value as a Doppler offset value detected by the TRP in the reference beam direction. In an embodiment, the network side detects the Doppler offset value at all TRPs that can receive the above UL RS in the reference beam direction, obtains an integrated Doppler value after processing, and regards the integrated Doppler value as the Doppler offset value detected by the TRP in the reference beam direction. In an embodiment, the network side detect a Doppler offset value in the beam direction where the target TRP is located using any TRP, and regards the Doppler offset value as the Doppler offset value detected in the beam direction where the target TRP is located. In an embodiment, the network side detect a Doppler offset value using a TRP with a maximum uplink signal received power in the beam direction where the target TRP is located, and regards the Doppler offset value as the Doppler offset value detected in the beam direction where the target TRP is located. In an embodiment, the network side detects the Doppler offset value at all TRPs that can receive the above UL RS in the beam direction where the target TRP is located, obtains an integrated Doppler value after processing, and regards the integrated Doppler value as the Doppler offset value detected in the beam direction where the target TRP is located. In an embodiment, the network side detect a Doppler offset value at the target TRP, and regards the Doppler offset value as the Doppler offset value detected in the beam direction where the target TRP is located.

The reference signal is transmitted by the following scheme.

The QCL reference signals in two TCI sates (which can be expand to three or more TCI states) are transmitted from two different TRPs respectively, where the QCL reference signal RS 1 in TCI sate 1 (the reference signal corresponding to QCL-TypeA) is transmitted from the reference TRP; or
the QCL reference signals in two TCI sates are transmitted from one or more TRPs directed to different beam directions respectively, where the QCL reference signal in TCI state 1 (the reference signal corresponding to QCL-TypeA) is transmitted from one or more TRPs directed to the reference beam direction, the QCL reference signal RS 2 in TCI state 2 (reference signal corresponding to QCL-TypeE) is transmitted from one or more TRPs directed to another beam direction.

In an embodiment, no Doppler pre-compensation is performed on the QCL reference signal, that is, the downlink frequency on the network side is used for transmission.

Step 4, with respect to each data layer for PDSCH and each DMRS port for PDSCH, UE determines the delay property using all reference signals (RS 1 and RS2) corresponding to the QCL type including the delay property and determines the Doppler property according to the reference signal corresponding to the QCL type including the Doppler property. The UE performs channel estimation of the PDSCH by using the above-mentioned delay property and Doppler property.

In an embodiment, when the UE determine the delay property of the PDSCH jointly using multiple reference signals (such as RS1 and RS2), the UE uses each reference signal to determine the power and delay of a transmission path, and then combines multiple determined transmission paths as the transmission paths for PDSCH. In an embodiment, the combination scheme includes superposing power of paths with the same delay.

In an embodiment, when the UE determine the delay property of the PDSCH jointly using multiple reference signals (such as RS1 and RS2), the UE uses each reference signal to determine a power delay profile, and then combines multiple determined power delay profiles as the power delay profile for PDSCH. In an embodiment, the combination scheme includes adding power delay profiles.

In an embodiment, in the above schemes, the UE determines the uplink frequency of the uplink reference signal (UL RS) in step 1 based on a reference signal corresponding to the QCL type including the Doppler property.

In an embodiment, the configuration information of the UL RS includes a configuration of one QCL reference signal, where the QCL reference signal is used for indicating a reference signal for determining an uplink frequency of the UL RS. (Purpose: the UE is indicated about using which TRS to determine the uplink frequency of the UL RS, and the base station performs Doppler pre-compensation on both PDSCH and DMRS for PDSCH from each TRP).

Step 3 may be modified to: step 3', the network side transmits PDSCH, DMRS for PDSCH and QCL reference signal.

When transmission of PDSCH and DMRS for PDSCH is performed, Doppler pre-compensation is performed at all TRPs.

In an embodiment, the network side determines a difference between the Doppler pre-compensation values at any two TRPs used for transmitting PDSCH and DMRS for PDSCH as a difference between the Doppler offset values detected by the network side at the two TRPs. For example, the network side selects a TRP as the reference TRP, and the Doppler pre-compensation value at any target TRP is a difference between a Doppler offset value detected by the network side at the reference TRP and a Doppler offset value detected by the network side at the TRP (for example, subtracting the Doppler offset value detected by the network side at the TRP from the Doppler offset value detected by the network side at the reference TRP).

In an embodiment, TRPs in the same beam direction (may be called as the reference beam direction) use the same Doppler pre-compensation value, and a difference between the Doppler pre-compensation values of any two beam directions is equal to a difference between Doppler values in two Doppler directions detected by the network side.

The QCL reference signal is transmitted by the same scheme as the scheme in step 3.

In an embodiment, the reference signal corresponding to the QCL-TypeA is transmitted from one or more TRPs in the same beam direction.

Step 4', with respect to PDSCH and DMRS ports for PDSCH, UE determines the delay property using all reference signals (RS 1 and RS2) corresponding to the QCL type including delay property.

In the transmission schemes, the Doppler shifts of the downlink signal arriving at the UE from each TRP are basically the same when PDSCH is transmitted from multiple TRPs, and thus large Doppler shift from a positive path of some TRPs and large Doppler shift from a negative path of some TRPs are avoided, the Doppler spread is eliminated well and the demodulation performance of the PDSCH is improved.

Since no Doppler pre-compensation is performed on the QCL reference signals (RS 1 and RS 2 in the example) used to determine the Doppler property and delay property of the PDSCH, the QCL reference signal transmitted by the network side can be used by all UEs. Therefore, no specific QCL reference signal for each UE is required to be transmitted, which saves QCL reference signal overhead.

In addition, since the Doppler shift of the RS 1 signal in this solution is the same as the Doppler shift of the PDSCH, the UE can obtain the Doppler property of the PDSCH more accurately through the RS signal of the present application. For different TRPs, different QCL reference signals are used to determine the delay property of the PDSCH, the measured delay property of the PDSCH can better reflect the delay property of each TRP channel, which enables the UE to obtain the delay property of the PDSCH more accurately.

For the above-mentioned second kind of QCL configuration information, the following are basic procedures.
(1) The UE transmits an uplink reference signal (UL RS).
(2) Multiple TRPs on the network side simultaneously receive the UL RS transmitted by the UE, and determine the frequency offset with respect to the uplink frequency on the base station side.
(3) The network side transmits PDSCH, DMRS for PDSCH and QCLreference signal.

When transmission of PDSCH and DMRS for PDSCH is performed, no Doppler pre-compensation is performed at one TRP (assuming that the TRP is the reference TRP), that is, the downlink frequency on the network side is used for transmission, and at other TRPs (may be called as the target TRP), Doppler pre-compensation is performed for transmission.

In an embodiment, the Doppler pre-compensation value at any target TRP is a difference between a Doppler offset value detected by the network side at the reference TRP and a Doppler offset value detected by the network side at the TRP (for example, subtracting the Doppler offset value detected by the network side at the TRP from the Doppler offset value detected by the network side at the reference TRP); or
when transmitting PDSCH and DMRS FOR PDSCH, the network side performs no Doppler pre-compensation at TRPs in the same beam direction (maybe called as the reference beam direction), that is, transmits using the downlink frequency on the network side and then performs pre-compensation at other TRPs (may be called as the target TRPs) and performs transmission.

In an embodiment, the Doppler pre-compensation value at any target TRP is a difference between a Doppler offset value detected by the network side at one reference TRP and a Doppler offset value detected by the network side at the target TRP (for example, subtracting the Doppler offset value detected by the network side at the target TRP from the Doppler offset value detected by the network side at one reference TRP).

In an embodiment, the Doppler pre-compensation value at any target TRP is a difference between a Doppler offset value detected by the network side at a TRP in a reference beam direction and a Doppler offset value detected by the network side in a beam direction where the target TRP is located (for example, subtracting the Doppler offset value detected by the network side in a beam direction where the target TRP is located from the Doppler offset value detected by the network side at the TRP in a reference beam direction). In an embodiment, the network side detects a Doppler offset value using any TRP in the reference beam direction, and regards the Doppler offset value as a Doppler offset value detected by the TRP in the reference beam direction. In an embodiment, the network side detects a Doppler offset value using a TRP with a maximum uplink signal received power in the reference beam direction, and uses the Doppler offset value as a Doppler offset value detected by the TRP in the reference beam direction. In an embodiment, the network side detects the Doppler offset value at all TRPs that can receive the above UL RS in the reference beam direction, obtains an integrated Doppler value after processing, and regards the integrated Doppler value as the Doppler offset value detected by the TRP in the reference beam direction. In an embodiment, the network side detect a Doppler offset value in the beam direction where the target TRP is located using any TRP, and regards the Doppler offset value as the Doppler offset value detected in the beam direction where the target TRP is located. In an embodiment, the network side detect a Doppler offset value using a TRP with a maximum uplink signal received power in the beam direction where the target TRP is located, and regards the Doppler offset value as the Doppler offset value detected in the beam direction where the target TRP is located. In an embodiment, the network side detects the Doppler offset value at all TRPs that can receive the above UL RS in the beam direction where the target TRP is located, obtains an integrated Doppler value after processing, and regards the integrated Doppler value as the Doppler offset value detected in the beam direction where the target TRP is located. In an embodiment, the network side detect a Doppler offset value at the target TRP, and regards the Doppler offset value as the Doppler offset value detected in the beam direction where the target TRP is located.

The QCL reference signal is transmitted by the following scheme.

The reference signal (RS2) corresponding to the QCL type being QCL-TypeA is transmitted from two TRPs at the same time, and the reference signal (RS1) corresponding to QCL-TypeB is transmitted from the reference TRP; or
the reference signal (RS2) corresponding to the QCL type being QCL-TypeA is transmitted from all TRPs in the beam direction, and the reference signal (RS1) corresponding to QCL-TypeB is transmitted in the reference beam direction.

In an embodiment, QCL-TypeA and QCL-TypeB are configured in the same TCI sate.

In an embodiment, QCL-TypeA and QCL-TypeB are configured in different TCI sates. (When there are two or more TCI states, the reference signals in two or more TCI states are transmitted from different TRPs respectively.)

In an embodiment, no Doppler pre-compensation is performed on the QCL reference signal, that is, the downlink frequency on the network side is used for transmission.

(4) With respect to each data layer for PDSCH and each DMRS port for PDSCH, UE determines the delay property of PDSCH and DMRS ports for PDSCH according to the reference signal (RS2) corresponding to the QCL type being QCL-TypeA, and determines the Doppler property of PDSCH and DMRS ports for PDSCH according to the reference signal (RS1) corresponding to the QCL type being QCL-TypeB. The UE performs channel estimation of the PDSCH by using the above-mentioned delay property and Doppler property.

In an embodiment, in the above schemes, the UE determines the uplink frequency of the uplink reference signal (UL RS) based on a reference signal corresponding to the QCL type including the Doppler property (QCL-TypeB).

In an embodiment, the configuration information of the UL RS includes a configuration of one QCL reference signal, where the QCL reference signal is used for indicating a reference signal for determining an uplink frequency of the UL RS. (Purpose: the UE is indicated about using which TRS to determine the uplink frequency of the UL RS, and the base station performs Doppler pre-compensation on both PDSCH and DMRS for PDSCH from each TRP).

(3) may be modified to: (3') the network side transmits PDSCH, DMRS for PDSCH and QCL reference signal.

When transmission of PDSCH and DMRS for PDSCH is performed, Doppler pre-compensation is performed at all TRPs.

In an embodiment, the network side determines a difference between the Doppler pre-compensation values at any two TRPs used for transmitting PDSCH and DMRS for PDSCH as a difference between the Doppler offset values detected by the network side at the two TRPs. For example, the network side selects a TRP as the reference TRP, and the Doppler pre-compensation value at any target TRP is a difference between a Doppler offset value detected by the network side at the reference TRP and a Doppler offset value detected by the network side at the TRP (for example, subtracting the Doppler offset value detected by the network side at the TRP from the Doppler offset value detected by the network side at the reference TRP).

In an embodiment, TRPs in the same beam direction use the same Doppler pre-compensation value, and a difference between the Doppler pre-compensation values of two beam directions is equal to a difference between Doppler values in two Doppler directions detected by the network side.

The QCL reference signal is transmitted by the same scheme as the scheme in (3).

In an embodiment, the reference signal corresponding to the QCL-TypeB is transmitted from one or more TRPs in the same beam direction.

(4') With respect to each data layer of PDSCH and DMRS ports for PDSCH, UE determines the delay property using all reference signals (RS 1 and RS2) corresponding to the QCL type including delay property.

In the transmission schemes, the Doppler shifts of the downlink signal arriving at the UE from each TRP are basically the same when PDSCH is transmitted from multiple TRPs, and thus large Doppler shift from a positive path of some TRPs and large Doppler shift from a negative path of some TRPs are avoided, the Doppler spread is eliminated well and the demodulation performance of the PDSCH is improved.

Since no Doppler pre-compensation is performed on the QCL reference signals (RS 1 and RS 2 in the example) used to determine the Doppler property and delay property of the PDSCH, the QCL reference signal transmitted by the network side can be used by all UEs. Therefore, no specific QCL reference signal for each UE is required to be transmitted, which saves QCL reference signal overhead.

In addition, since the Doppler shift of the RS 1 signal in this solution is the same as the Doppler shift of the PDSCH, the UE can obtain the Doppler property of the PDSCH more accurately through the RS 1 signal of the present application. The TRP for transmitting the QCL reference signal used to determine the delay property of the PDSCH is exactly the same as the TRP for transmitting the PDSCH, and the UE can obtain the delay property of the PDSCH more accurately by using the reference signal (i.e., RS2 in the example).

For the above-mentioned third kind of QCL configuration information, the following are basic procedures.
(1) The UE transmits an uplink reference signal (UL RS).
(2) Multiple TRPs on the network side simultaneously receive the UL RS transmitted by the UE, and determine the frequency offset with respect to the uplink frequency on the base station side.
(3) The network side transmits PDSCH, DMRS for PDSCH and QCLreference signal.

When transmission of PDSCH and DMRS for PDSCH is performed, no Doppler pre-compensation is performed at one TRP (assuming that the TRP is the reference TRP), that is, the downlink frequency on the network side is used for transmission, and at other TRPs (may be called as the target TRP), Doppler pre-compensation is performed for transmission;

In an embodiment, the Doppler pre-compensation value at any target TRP is a difference between a Doppler offset value detected by the network side at the reference TRP and a Doppler offset value detected by the network side at the TRP (subtracting the Doppler offset value detected by the network side at the TRP from the Doppler offset value detected by the network side at the reference TRP); or
when transmitting PDSCH and DMRS FOR PDSCH, the network side performs no Doppler pre-compensation at TRPs in the same beam direction (maybe called as the reference beam direction), that is, transmits using the downlink frequency on the network side and then performs pre-compensation at other TRPs (may be called as the target TRPs) and performs transmission.

In an embodiment, the Doppler pre-compensation value at any target TRP is a difference between a Doppler offset value detected by the network side at one reference TRP and a Doppler offset value detected by the network side at the target TRP (for example, subtracting the Doppler offset value detected by the network side at the target TRP from the Doppler offset value detected by the network side at one reference TRP).

In an embodiment, the Doppler pre-compensation value at any target TRP is a difference between a Doppler offset value detected by the network side at a TRP in a reference beam direction and a Doppler offset value detected by the network side in a beam direction where the target TRP is located (for example, subtracting the Doppler offset value detected by the network side in a beam direction where the target TRP is located from the Doppler offset value detected by the network side at the TRP in a reference beam direction). In an embodiment, the network side detects a Doppler offset value using any TRP in the reference beam direction, and regards the Doppler offset value as a Doppler offset value detected by the TRP in the reference beam direction. In an embodiment, the network side detects a Doppler offset value using a TRP with a maximum uplink signal received power in the reference beam direction, and uses the Doppler offset value as a Doppler offset value detected by the TRP in the reference beam direction. In an embodiment, the network side detects the Doppler offset value at all TRPs that can receive the above UL RS in the reference beam direction, obtains an integrated Doppler value after processing, and regards the integrated Doppler value as the Doppler offset value detected by the TRP in the reference beam direction. In an embodiment, the network side detect a Doppler offset value in the beam direction where the target TRP is located using any TRP, and regards the Doppler offset value as the Doppler offset value detected in the beam direction where the target TRP is located. In an embodiment, the network side detect a Doppler offset value using a TRP with a maximum uplink signal received power in the beam direction where the target TRP is located, and regards the Doppler offset value as the Doppler offset value detected in the beam direction where the target TRP is located. In an embodiment, the network side detects the Doppler offset value at all TRPs that can receive the above UL RS in the beam direction where the target TRP is located, obtains an integrated Doppler value after processing, and regards the integrated Doppler value as the Doppler offset value detected in the beam direction where the target TRP is located. In an embodiment, the network side detect a Doppler offset value at the target TRP, and regards the Doppler offset value as the Doppler offset value detected in the beam direction where the target TRP is located.

The QCL reference signal is transmitted by the following scheme.

The reference signal (RS2) corresponding to the QCL type being QCL-TypeE is transmitted from two TRPs at the same time, and the reference signal (RS1) corresponding to QCL-TypeB is transmitted from the reference TRP; or
the reference signal (RS2) corresponding to the QCL type being QCL-TypeE is transmitted from all TRPs in the beam direction, and the reference signal (RS1) corresponding to QCL-TypeB is transmitted in the reference beam direction.

In an embodiment, QCL-TypeE and QCL-TypeB are configured in the same TCI sate.

In an embodiment, QCL-TypeE and QCL-TypeB are configured in different TCI sates. (When there are two or more TCI states, the reference signals in two or more TCI states are transmitted from different TRPs respectively)

In an embodiment, no Doppler pre-compensation is performed on the QCL reference signal, that is, the downlink frequency on the network side is used for transmission.

(4) With respect to each data layer for PDSCH and each DMRS port for PDSCH, UE determines the delay property of PDSCH and DMRS ports for PDSCH according to the reference signal (RS2) corresponding to the QCL type being QCL-TypeE, and determines the Doppler property of PDSCH and DMRS ports for PDSCH according to the reference signal (RS1) corresponding to the QCL type being QCL-TypeB. The UE performs channel estimation of the PDSCH by using the above-mentioned delay property and Doppler property.

In an embodiment, in the above schemes, the UE determines the uplink frequency of the uplink reference signal (UL RS) based on a reference signal corresponding to the QCL type including the Doppler property (QCL-TypeB).

In an embodiment, the configuration information of the UL RS includes a configuration of one QCL reference signal, where the QCL reference signal is used for indicating a reference signal for determining an uplink frequency of the UL RS. (Purpose: the UE is indicated about using which TRS to determine the uplink frequency of the UL RS, and the base station performs Doppler pre-compensation on both PDSCH and DMRS for PDSCH from each TRP).

(3) may be modified to: (3') the network side transmits PDSCH, DMRS for PDSCH and QCL reference signal.

When transmission of PDSCH and DMRS for PDSCH is performed, Doppler pre-compensation is performed at all TRPs.

In an embodiment, the network side determines a difference between the Doppler pre-compensation values at any two TRPs used for transmitting PDSCH and DMRS for PDSCH as a difference between the Doppler offset values detected by the network side at the two TRPs. For example, the network side selects a TRP as the reference TRP, and the Doppler pre-compensation value at any target TRP is a difference between a Doppler offset value detected by the network side at the reference TRP and a Doppler offset value detected by the network side at the TRP (for example, subtracting the Doppler offset value detected by the network side at the TRP from the Doppler offset value detected by the network side at the reference TRP).

In an embodiment, TRPs in the same beam direction use the same Doppler pre-compensation value, and a difference between the Doppler pre-compensation values of two beam directions is equal to a difference between Doppler values in two Doppler directions detected by the network side.

The QCL reference signal is transmitted by the same scheme as the scheme in (3).

In an embodiment, the reference signal corresponding to the QCL-TypeB is transmitted from one or more TRPs in the same beam direction.

(4') With respect to each data layer of PDSCH and DMRS ports for PDSCH, UE determines the delay property using a reference signal (the reference signal corresponding to the QCL-TypeE, RS2) corresponding to the QCL type including delay property.

For the above-mentioned fourth kind of QCL configuration information, the following are basic procedures.
(1) The UE transmits an uplink reference signal (UL RS).
(2) Multiple TRPs on the network side simultaneously receive the UL RS transmitted by the UE, and determine the frequency offset with respect to the uplink frequency on the base station side.
(3) The network side transmits PDSCH, DMRS for PDSCH and QCLreference signal.

When transmission of PDSCH and DMRS for PDSCH is performed, no Doppler pre-compensation is performed at one TRP (assuming that the TRP is the reference TRP), that is, the downlink frequency on the network side is used for transmission, and at other TRPs (may be called as the target TRP), Doppler pre-compensation is performed for transmission.

In an embodiment, the Doppler pre-compensation value at any target TRP is a difference between a Doppler offset value detected by the network side at the reference TRP and a Doppler offset value detected by the network side at the TRP (subtracting the Doppler offset value detected by the network side at the TRP from the Doppler offset value detected by the network side at the reference TRP); or
when transmitting PDSCH and DMRS FOR PDSCH, the network side performs no Doppler pre-compensation at TRPs in the same beam direction (maybe called as the reference beam direction), that is, transmits using the downlink frequency on the network side and then performs pre-compensation at other TRPs (may be called as the target TRPs) and performs transmission.

In an embodiment, the Doppler pre-compensation value at any target TRP is a difference between a Doppler offset value detected by the network side at one reference TRP and a Doppler offset value detected by the network side at the target TRP (for example, subtracting the Doppler offset value detected by the network side at the target TRP from the Doppler offset value detected by the network side at one reference TRP).

In an embodiment, the Doppler pre-compensation value at any target TRP is a difference between a Doppler offset value detected by the network side at a TRP in a reference beam direction and a Doppler offset value detected by the network side in a beam direction where the target TRP is located (for example, subtracting the Doppler offset value detected by the network side in a beam direction where the target TRP is located from the Doppler offset value detected by the network side at the TRP in a reference beam direction). In an embodiment, the network side detects a Doppler offset value using any TRP in the reference beam direction, and regards the Doppler offset value as a Doppler offset value detected by the TRP in the reference beam direction. In an embodiment, the network side detects a Doppler offset value using a TRP with a maximum uplink signal received power in the reference beam direction, and uses the Doppler offset value as a Doppler offset value detected by the TRP in the reference beam direction. In an embodiment, the network side detects the Doppler offset value at all TRPs that can receive the above UL RS in the reference beam direction, obtains an integrated Doppler value after processing, and regards the integrated Doppler value as the Doppler offset value detected by the TRP in the reference beam direction. In an embodiment, the network side detect a Doppler offset value in the beam direction where the target TRP is located using any TRP, and regards the Doppler offset value as the Doppler offset value detected in the beam direction where the target TRP is located. In an embodiment, the network side detect a Doppler offset value using a TRP with a maximum uplink signal received power in the beam direction where the target TRP is located, and regards the Doppler offset value as the Doppler offset value detected in the beam direction where the target TRP is located. In an embodiment, the network side detects the Doppler offset value at all TRPs that can receive the above UL RS in the beam direction where the target TRP is located, obtains an integrated Doppler value after processing, and regards the integrated Doppler value as the Doppler offset value detected in the beam direction where the target TRP is located. In an embodiment, the network side detect a Doppler offset value at the target TRP, and regards the Doppler offset value as the Doppler offset value detected in the beam direction where the target TRP is located.

The QCL reference signal is transmitted by the following scheme.

Any reference signal corresponding to the QCL type being QCL-TypeA is transmitted from only one TRP, and different reference signals corresponding to the QCL type being QCL-TypeA are transmitted from different TRPs; or
any reference signal corresponding to the QCL type being QCL-TypeA is transmitted from only one or more TRPs directed to the same beam direction, and different reference signals corresponding to the QCL type being QCL-TypeA are transmitted from TRPs directed to different beam directions.

In an embodiment, multiple reference signals corresponding to the QCL type being QCL-TypeA are configured in the same TCI sate.

In an embodiment, multiple reference signals corresponding to the QCL type being QCL-TypeA are configured in different TCI sates. (When there are two or more TCI states, the reference signals in two or more TCI states are transmitted from different TRPs respectively.)

In an embodiment, no Doppler pre-compensation is performed on the QCL reference signal, that is, the downlink frequency on the network side is used for transmission.

In an embodiment, the specific reference signal corresponding to QCL-TypeA is transmitted from the TRP at which no Doppler pre-compensation is performed on the PDSCH.

In an embodiment, the specific reference signal corresponding to QCL-TypeA is:
a reference signal indicated by the base station; or
a default reference signal.

The reference signal indicated by the base station can be:
a reference signal corresponding to which QCL-typeA in the TCI state indicated directly by the base station in case of only one TCI state; or
a reference signal corresponding to QCL-typeA in the specific TCI state indicated by the base station in case of multiple TCI states (for example, the base station indicates the UE to determine the Doppler property of the PDSCH using the reference signal corresponding to QCL-TypeA in the first TCI state and the UE determines the Doppler property of the PDSCH using the reference signal corresponding to QCL-TypeA in the first TCI state); or
a reference signal transmitted from QCL-typeA for specific TRP indicated by the base station in case of multiple TCI states.

The default reference signal can be:
a reference signal corresponding to the QCL-TypeA in the specific TCI state agreed between the network side and the LTE; or
a reference signal (for example, a reference signal corresponding to the first QCL-TypeA in the TCI states) corresponding to the specific QCL-TypeA agreed between the network side and the UE in case of the multiple TCI states.

(4) The UE jointly determines the delay property of the PDSCH and the DMRS port for the PDSCH according to all reference signals corresponding to the QCL type (for example, QCL-TypeA) including both delay property and Doppler property in one or two TCI states and determines the Doppler property of the PDSCH and the DMRS port for the PDSCH according to the specific reference signal in step (3). The UE can further perform channel estimation of the PDSCH by using the above-mentioned delay property and Doppler property.

In an embodiment, in the above schemes, the UE determines the uplink frequency of the uplink reference signal (UL RS) based on one specific reference signal. In an embodiment, the specific reference signal here can be:
a reference signal indicated by the base station; or
a default reference signal.

The reference signal indicated by the base station can be:
a reference signal corresponding to which QCL-typeA in the TCI state indicated directly by the base station in case of only one TCI state; or
a reference signal corresponding to QCL-typeA in the specific TCI state indicated by the base station in case of multiple TCI states (for example, the base station indicates the UE to determine the Doppler property of the PDSCH using the reference signal corresponding to QCL-TypeA in the first TCI state and the UE determines the Doppler property of the PDSCH using the reference signal corresponding to QCL-TypeA in the first TCI state); or
a reference signal transmitted from QCL-typeA for specific TRP indicated by the base station in case of multiple TCI states.

The default reference signal can be:
a reference signal corresponding to the QCL-TypeA in the specific TCI state agreed between the network side and the LTE; or
a reference signal (for example, a reference signal corresponding to the first QCL-TypeA in the TCI states) corresponding to the specific QCL-TypeA agreed between the network side and the UE in case of the multiple TCI states.

In an embodiment, the configuration information of the UL RS includes a configuration of one QCL reference signal, where the QCL reference signal is used for indicating a reference signal for determining an uplink frequency of the UL RS. (Purpose: the UE is indicated about using which TRS to determine the uplink frequency of the UL RS, and the base station performs Doppler pre-compensation on both PDSCH and DMRS for PDSCH from each TRP).

(3) may be modified to that (3') the network side transmits PDSCH, DMRS for PDSCH and QCL reference signal.

When transmission of PDSCH and DMRS for PDSCH is performed, Doppler pre-compensation is performed at all TRPs.

In an embodiment, the network side determines a difference between the Doppler pre-compensation values at any two TRPs used for transmitting PDSCH and DMRS for PDSCH as a difference between the Doppler offset values detected by the network side at the two TRPs. For example, the network side selects a TRP as the reference TRP, and the Doppler pre-compensation value at any target TRP is a difference between a Doppler offset value detected by the network side at the reference TRP and a Doppler offset value detected by the network side at the TRP (for example, subtracting the Doppler offset value detected by the network side at the TRP from the Doppler offset value detected by the network side at the reference TRP).

In an embodiment, TRPs in the same beam direction use the same Doppler pre-compensation value, and a difference between the Doppler pre-compensation values of two beam directions is equal to a difference between Doppler values in two Doppler directions detected by the network side.

The QCL reference signal is transmitted by the same scheme as the scheme in (3).

In an embodiment, the base station transmits the specific reference signal in the present embodiment at the multiple TRPs in the same beam direction.

In an embodiment, the base station transmits the specific reference signal in the present embodiment at the reference TRP.

(4') With respect to each data layer of PDSCH and DMRS ports for PDSCH, the UE jointly determines the delay property of the PDSCH and the DMRS port for the PDSCH using all reference signals corresponding to the QCL type (for example, QCL-TypeA) including both delay property and Doppler property in one or two TCI states.

The following describes the method for information transmission in the embodiment of the present application from the perspective of interaction between a network device and user equipment (UE).

### Embodiment 1:

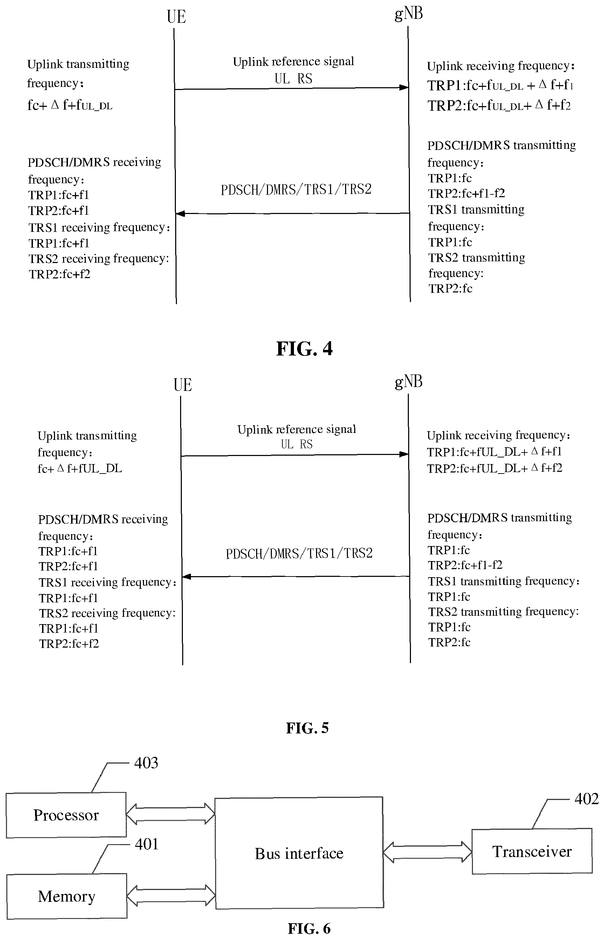

As shown in FIG. 4, taking the simultaneous transmission of PDSCH/DMRS from two TRPs as an example, the PDSCH/DMRS are transmitted from two TRPs simultaneously, and Doppler pre-compensation is performed at TRP2. The first reference signal is TRS1, and the second reference signal is TRS2.

Assuming that UE transmits the uplink reference signal (UL RS) for Doppler estimation transmitted at a center frequency (*f_{c}*+Δ*f*+*f_{UL-DL}*), where *f_{c}* is a downlink (DL) center frequency determined by the base station, Δ*f* is a difference between a downlink center frequency determined by the UE and the downlink center frequency determined by the base station, *f_{UL-DL}* is a difference between the DL center frequency and an UL center frequency.

The base station estimates the Doppler offset for each TRP by using the UL RS, and determines the frequency pre-compensation value of the PDSCH at each TRP. The base station transmits PDSCH from TRP1 and TRP2 at the same time, does not perform frequency pre-compensation on PDSCH at TRP1, and performs frequency pre-compensation on PDSCH at TRP 2, then the center frequency at which PDSCH is transmitted at TRP1 is *f_{c}*, and the center frequency at which the PDSCH is transmitted at TRP2 is (*f_{c}*+*f₁-f₂*). The base station transmits the first reference signal TRS1 at TRP1, and does not perform frequency pre-compensation on TRS1, then the center frequency at which TRS1 is transmitted at TRP1 is *f_{c}*; the base station transmits the second reference signal TRS2 at TRP2, and does not perform frequency pre-compensation on TRS2, and then the center frequency at which TRS2 is transmitted at TRP2 is *f_{c}*.

Since the high-speed movement of the UE will result in Doppler shift, in the channel over which PDSCH is received, the center frequency of the path corresponding to TRP1 is (*f_{c}*+*f₁*), and the center frequency of the path corresponding to TRP2 is (*f_{c}*+*f₁*). The channel over which TRS1 is received comes from TRP1, and the center frequency of its receiving frequency is (*f_{c}*+*f₁*), which is the same as PDSCH. The channel over which TRS2 is received comes from TRP2, and the center frequency of its receiving frequency is (*f_{c}*+*f₂*). Since the Doppler shift value of TRS1 is the same as that of PDSCH, the UE can estimate the Doppler shift value of PDSCH more accurately according to TRS 1. Since the combination of the power delay profile of the TRS 1 channel and the power delay profile of the TRS2 channel is the power delay profile of the PDSCH channel, the UE can well estimate the delay property of the PDSCH through the TRS1 and TRS2. Since the Doppler shift values of each path of the channel over which the PDSCH is received are basically equal, no Doppler spread occurs, which can improve the UE demodulation performance for the PDSCH.

### Embodiment 2:

As shown in FIG. 5, assuming that UE transmits the uplink reference signal (UL RS) for Doppler estimation transmitted at a center frequency (*f_{c}*+Δ*f*+*f_{UL-DL}),* where *f_{c}* is a downlink (DL) center frequency determined by the base station, Δ*f* is a difference between a downlink center frequency determined by the UE and the downlink center frequency determined by the base station, *f_{UL-DL}* is a difference between the DL center frequency and an UL center frequency.

The base station estimates the Doppler offset for each TRP by using the UL RS, and determines the frequency pre-compensation value of the PDSCH and DMRS corresponding to the PDSCH at each TRP. The base station transmits PDSCH and the DMRS corresponding to the PDSCH from TRP1 and TRP2 at the same time, and does not perform frequency pre-compensation on PDSCH and the DMRS corresponding to the PDSCH at TRP1, and performs frequency pre-compensation on PDSCH using (*f₁-f₂*) at TRP2, the center frequency at which PDSCH and the DMRS corresponding to the PDSCH are transmitted at TRP1 is *f_{c},* and the center frequency at which the PDSCH and the DMRS corresponding to the PDSCH are transmitted at TRP2 is (*f_{c}*+*f₁*-*f₂*). The base station transmits the first reference signal TRS1 at TRP1, and does not perform frequency pre-compensation on TRS1, then the center frequency at which TRS1 is transmitted at TRP1 is *f_{c}*; the base station transmits the second reference signal TRS2 at TRP1 and TRP2, and does not perform frequency pre-compensation on TRS2, and then the center frequency at which TRS2 is transmitted at TRP1 and TRP2 is *f_{c}*.

Since the high-speed movement of the UE will result in Doppler shift, the UE receives the PDSCH. In the PDSCH channel, the center frequency of the path corresponding to TRP1 on the UE side is (*f_{c}*+*f₁*), and the center frequency of the path corresponding to TRP2 is (*f_{c}*+*f₁*). The channel for TRS1 comes from TRP1, and the center frequency of its receiving frequency is (*f_{c}*+*f₁*), which is the same as PDSCH. The channels for TRS2 come from TRP1 and TRP2, and the center frequencies of the paths of the two TRPs on the UE side are both (*f_{c}*+*f₂*). Since the Doppler shift value of TRS1 is the same as that of PDSCH, the UE can estimate the Doppler shift value of PDSCH more accurately according to TRS 1. Since the combination of the power delay profile of the TRS 1 channel and the power delay profile of the TRS2 channel is the power delay profile of the PDSCH channel, the UE can well estimate the delay property of the PDSCH through the TRS 1 and TRS2. Since the Doppler shift values of each path of the channel over which the PDSCH is received are basically equal, no Doppler spread occurs, which can improve the UE demodulation performance for the PDSCH.

FIG. 6 is a schematic structural diagram of a network device according to an embodiment of the present application. As shown in FIG. 6, the network device includes a memory 601, a transceiver 602, and a processor 603, where the memory 601, the transceiver 602, and the processor 603 complete mutual communication through a bus interface. The processor 603 can read a computer program in the memory 601 and the computer program causes the processor to perform the following operations:
transmitting quasi-co-location (QCL) configuration information of a downlink signal to the UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
transmitting the downlink signal to the UE.

In the network device, reference signals indicated by the QCL configuration information configured by the network device can be used by all UEs since no Doppler shift pre-compensation need to be performed on the reference signal indicated by the QCL configuration information used to determine the delay property and Doppler property of the downlink signal, the network device does not need to transmit a specific reference signal for each UE, and pilot overhead is saved.

Based on any of the above embodiments, the transmitting the downlink signal to the UE includes:
transmitting the downlink signal through multiple transmission reception points (TRPs).

The computer program causes the processor to perform the following operations:
transmitting the reference signals to the UE, where the second reference signal is transmitted from a TRP that is different from the TRP used for transmitting the first reference signal among the TRPs used for transmitting the downlink signal.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the transmitting the downlink signal to the UE includes:
transmitting the downlink signal through multiple transmission reception points (TRPs).

The computer program causes the processor to further perform the following operations:
transmitting the second reference signal simultaneously to the UE by using all TRPs used for transmitting the downlink signal.

The above-mentioned network device according to the embodiments of the present application can implement all the method steps implemented by the above-mentioned method embodiments, and can achieve the same effect. The same parts and beneficial effects as the same method embodiments will not be repeated here.

Based on any foregoing embodiment, the first reference signal is a reference signal corresponding to a QCL type being QCL-TypeA, and the second reference signal is a reference signal corresponding to a QCL type being QCL-TypeE. The QCL-TypeE represents a QCL type indicating average delay and delay spread, and the QCL-TypeA represents a QCL type indicating Doppler shift, Doppler spread, average delay and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the QCL configuration information is carried by a set of transmission configuration indication (TCI) states, and the set of TCI states is any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least one or more first reference signals corresponding to the QCL type being QCL-TypeB, and another TCI state indicating at least the second reference signal corresponding to the QCL type being QCL-TypeE; at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the downlink signal is transmitted by multiple TRPs, and before transmitting the downlink signal to the UE, the computer program causes the processor to perform any of the following items:
determining a frequency offset value of an uplink signal at a first TRP, and determining a frequency compensation value of the downlink signal at a second TRP according to the frequency offset value at the first TRP, where the first TRP is a TRP selected by the network device, the second TRP is one or more TRPs other than the first TRP;
determining a frequency offset value of the uplink signal at a third TRP in a reference beam direction, determining a frequency compensation value of the downlink signal at the third TRP according to the frequency offset value at the third TRP, and determining the frequency compensation value at the third TRP as a frequency compensation value at a fourth TRP in the reference beam direction, where the third TRP is a TRP in the reference beam direction, and the fourth TRP is one or more TRPs other than the third TRP in the reference beam direction;
determining one frequency offset value according to a signal received by a fifth TRP in the reference beam direction based on the uplink signal, and determining a frequency compensation value of a sixth TRP in the reference beam direction according to the frequency offset value, where the fifth TRP is a group of TRPs in the reference beam direction, and the sixth TRP is one or more TRPs other than the fifth TRP in the reference beam direction; and
determining one frequency offset value according to a signal received by all TRPs in the reference beam direction based on the uplink signal, and determining a frequency compensation value at a seventh TRP in another beam direction according to the frequency offset value, where the seventh TRP is one or more TRPs in a beam direction other than the reference beam direction.

The transmitting the downlink signal to the UE includes:
transmitting the downlink signal to the UE according to the frequency compensation value.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the determining a frequency compensation value of the downlink signal at a second TRP according to the frequency offset value at the first TRP includes:
obtaining a difference between the frequency offset value at the first TRP and an obtained frequency offset value at the second TRP;
determining, in case that a frequency compensation value of the first TRP is 0, or no adjustment is performed on a downlink frequency of the downlink signal at the first TRP, that the frequency compensation value at the second TRP is the difference; or
determining, in case that the frequency compensation value of the first TRP is Δ*f*₁, that the frequency compensation value at the second TRP is a sum of the difference and Δ*f*₁, where Δ*f*₁ is not 0.

It can be understood that, if the frequency compensation value of the first TRP is 0, no Doppler compensation is performed at the first TRP.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the computer program causes the processor to perform the following operations: after determining the frequency offset value of the uplink signal at the third TRP in the direction of the reference beam,
determining frequency compensation values at each TRP in another beam direction according to the frequency offset value at the third TRP.

The determining frequency compensation values at each TRP in another beam direction according to the frequency offset value at the third TRP, includes:
obtaining a difference between the frequency offset value at the third TRP and a frequency offset value at an eighth TRP, where the eighth TRP is one or more TRPs in a beam direction other than the reference beam direction;
determining, in case that the frequency compensation value of the third TRP is 0, or no adjustment is performed on a downlink frequency of the downlink signal at the third TRP, that frequency compensation values at all TRPs in a beam direction where the eighth TRP is located are the difference; or
determining, in case that the frequency compensation value of the third TRP is Δ*f*₂, that the frequency compensation values at all TRPs in a beam direction where the eighth TRP is located are a sum of the difference and Δ*f*₂, where Δ*f*₂ is not 0.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, after determining one frequency offset value according to a signal received by a fifth TRP in the reference beam direction based on the uplink signal, the computer program causes the processor to further perform the following operations:
determining frequency compensation values at each TRP in another beam direction according to the frequency offset value.

The determining frequency compensation values at each TRP in another beam direction according to the frequency offset value, includes:
obtaining a difference between the frequency offset value at the fifth TRP and a frequency offset value at a ninth TRP, where the ninth TRP is one or more TRPs in a beam direction other than the reference beam direction;
determining, in case that the frequency compensation value at the fifth TRP is 0, or no adjustment is performed on a downlink frequency of the downlink signal at the fifth TRP, that frequency compensation values at all TRPs in a beam direction where the ninth TRP is located are the difference; or
determining, in case that the frequency compensation value at the ninth TRP is Δ*f*₃, that the frequency compensation values at all TRPs in a beam direction where the ninth TRP is located are a sum of the difference and Δ*f*₃, where Δ*f*₃ is not 0.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, in some embodiments, the first reference signal and the second reference signal in the four kinds of the QCL configuration information are transmitted by the following modes:
in case that the QCL configuration information indicates a first reference signal corresponding to the QCL type being QCL-TypeA and a second reference signal corresponding to the QCL type being QCL-TypeE, transmitting the first reference signal corresponding to the QCL type being QCL-TypeA through the first TRP, and transmitting the second reference signal corresponding to the QCL type being QCL-TypeE through one or more second TRPs;
in case that the QCL configuration information indicates a first reference signal corresponding to the QCL type being QCL-TypeB and a second reference signal corresponding to the QCL type being QCL-TypeA, transmitting the first reference signal corresponding to the QCL type being QCL-TypeB through the first TRP, and transmitting the second reference signal corresponding to the QCL type being QCL-TypeA through one or more second TRPs;
in case that the QCL configuration information indicates a first reference signal corresponding to the QCL type being QCL-TypeB and a second reference signal corresponding to the QCL type being QCL-TypeE, transmitting the first reference signal corresponding to the QCL type being QCL-TypeB through the first TRP, and transmitting the second reference signal corresponding to the QCL type being QCL-TypeE through one or more second TRPs; and
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through the first TRP, and transmitting the second reference signal corresponding to the QCL type being QCL-TypeA through one or more second TRPs.

The above-mentioned network device according to the embodiments of the present application can implement all the method steps implemented by the above-mentioned method embodiments, and can achieve the same effect. The same parts and beneficial effects as the same method embodiments will not be repeated here.

Based on any foregoing embodiment, the computer program causes the processor to perform the following operations:
transmitting indication information of a QCL reference signal for the uplink signal to the UE, where the QCL reference signal is used for indicating a reference signal for determining the transmission frequency of the uplink signal, where the QCL reference signal is a signal in the first reference signal.

The above-mentioned network device according to the embodiments of the present application can implement all the method steps implemented by the above-mentioned method embodiments, and can achieve the same effect. The same parts and beneficial effects as the same method embodiments will not be repeated here.

In some embodiments, the computer program causes the processor to further perform the following operations:
transmitting TCI state indication information to the UE, where the TCI state indication information is used for indicating a TCI state corresponding to the first reference signal; or
transmitting sequence number indication information to the UE, where the sequence number indication information is used for indicating sequence numbers of the first reference signal among all QCL-TypeA reference signals indicated by TCI states associated with the downlink signal.

In the embodiment of the present application, the Doppler shifts of the downlink signal arriving at the UE from each TRP are basically the same when the downlink signal is transmitted from multiple TRPs, and thus large Doppler shift from a positive path of some TRPs and large Doppler shift from a negative path of some TRPs are avoided, the Doppler spread is eliminated well and the demodulation performance of the downlink signal is improved.

Since no Doppler pre-compensation is performed on the reference signal used to determine the Doppler property and the delay property of the downlink signal, a reference signal transmitted by the processor 603 can be used by all UEs. Therefore, no specific reference signal for each UE is required to be transmitted, which saves reference signal overhead, that is, saves pilot overhead. In addition, through the method for configuring the reference signal and the schemes for the UE to determine the Doppler property and delay property of the downlink signal in the embodiments of the present application, the UE can obtain relatively accurate delay property and Doppler property, and performance of downlink transmission in high-speed mobile scenarios is improved.

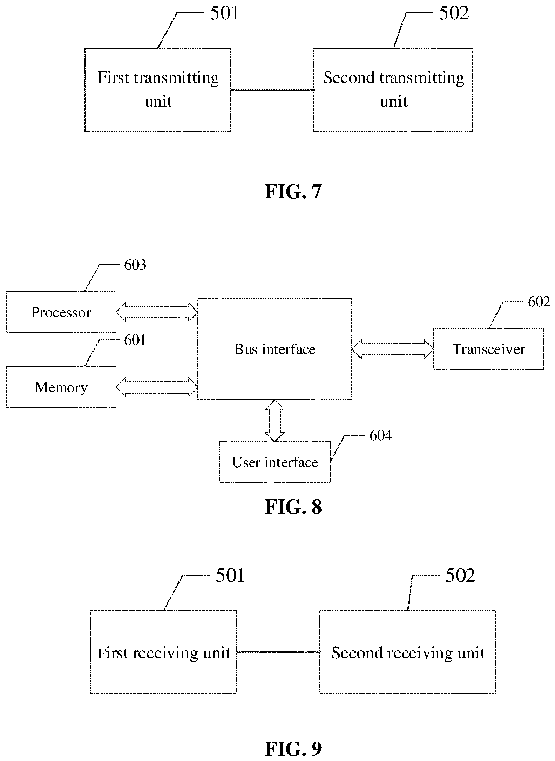

FIG. 7 is a schematic structural diagram of another network device according to another embodiment of the present application. As shown in FIG. 7, the network device includes a first transmitting unit 701 and a second transmitting unit 702, where
the first transmitting unit 701 is configured to transmit quasi-co-location (QCL) configuration information of a downlink signal to the UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
the second transmitting unit 702 is configured to transmit the downlink signal to the UE.

In the network device, reference signals indicated by the QCL configuration information configured by the network device can be used by all UEs since no Doppler shift pre-compensation need to be performed on the reference signal indicated by the QCL configuration information used to determine the delay property and Doppler property of the downlink signal, the network device does not need to transmit a specific reference signal for each UE, and pilot overhead is saved.

Based on any of the above embodiments, the second transmitting unit 702 is configured to transmit the downlink signal through multiple transmission reception points (TRPs).

The network device further includes:
a third transmitting unit, configured to transmit the reference signals to the UE, where the second reference signal is transmitted from a TRP that is different from the TRP used for transmitting the first reference signal among the TRPs used for transmitting the downlink signal.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the second transmitting unit 702 is configured to transmit the downlink signal through multiple TRPs.

The network device further includes:
a fourth transmitting unit, configured to transmit the second reference signal simultaneously to the UE by using all TRPs used for transmitting the downlink signal.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the first reference signal is a reference signal corresponding to a QCL type being QCL-TypeA, and the second reference signal is a reference signal corresponding to a QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the QCL configuration information is carried by a set of transmission configuration indication (TCI) states, and the set of TCI states is any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the downlink signal is transmitted by multiple transmission reception points (TRPs), and the network device further includes a first determining unit, configured to perform any of the following items:
determining a frequency offset value of an uplink signal at a first TRP, and determining a frequency compensation value of the downlink signal at a second TRP according to the frequency offset value at the first TRP, where the first TRP is a TRP selected by the network device, the second TRP is one or more TRPs other than the first TRP;
determining a frequency offset value of the uplink signal at a third TRP in a reference beam direction, determining a frequency compensation value of the downlink signal at the third TRP according to the frequency offset value at the third TRP, and determining the frequency compensation value at the third TRP as a frequency compensation value at a fourth TRP in the reference beam direction, where the third TRP is a TRP in the reference beam direction, and the fourth TRP is one or more TRPs other than the third TRP in the reference beam direction;
determining one frequency offset value according to a signal received by a fifth TRP in the reference beam direction based on the uplink signal, and determining a frequency compensation value of a sixth TRP in the reference beam direction according to the frequency offset value, where the fifth TRP is a group of TRPs in the reference beam direction, and the sixth TRP is one or more TRPs other than the fifth TRP in the reference beam direction; and
determining one frequency offset value according to a signal received by all TRPs in the reference beam direction based on the uplink signal, and determining a frequency compensation value at a seventh TRP in another beam direction according to the frequency offset value, where the seventh TRP is one or more TRPs in a beam direction other than the reference beam direction.

The second transmitting unit is configured to transmit the downlink signal to the UE according to the frequency compensation value.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the first determining unit is further configured to:
obtaining a difference between the frequency offset value at the first TRP and an obtained frequency offset value at the second TRP;
determining, in case that a frequency compensation value of the first TRP is 0, or no adjustment is performed on a downlink frequency of the downlink signal at the first TRP, that the frequency compensation value at the second TRP is the difference; or
determining, in case that the frequency compensation value of the first TRP is Δ*f*₁, that the frequency compensation value at the second TRP is a sum of the difference and Δ*f*₁, where Δ*f*₁ is not 0.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, after determining the frequency offset value of the uplink signal at the third TRP in the direction of the reference beam,
frequency compensation values at the TRPs in another beam direction are determined according to the frequency offset value at the third TRP.

Based on any of the above embodiments, the frequency compensation values at the TRPs in another beam direction are determined according to the frequency offset value at the third TRP by:
obtaining a difference between the frequency offset value at the third TRP and a frequency offset value at an eighth TRP, where the eighth TRP is one or more TRPs in a beam direction other than the reference beam direction;
determining, in case that the frequency compensation value of the third TRP is 0, or no adjustment is performed on a downlink frequency of the downlink signal at the third TRP, that frequency compensation values at all TRPs in a beam direction where the eighth TRP is located are the difference; or
determining, in case that the frequency compensation value of the third TRP is Δ*f*₂, that the frequency compensation values at all TRPs in a beam direction where the eighth TRP is located are a sum of the difference and Δ*f*₂, where Δ*f*₂ is not 0.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the network device further includes: a fifth transmitting unit, configured to perform one or more of the following items:
in case that the QCL configuration information indicates a first reference signal corresponding to the QCL type being QCL-TypeA and a second reference signal corresponding to the QCL type being QCL-TypeE, transmitting the first reference signal corresponding to the QCL type being QCL-TypeA through the first TRP, and transmitting the second reference signal corresponding to the QCL type being QCL-TypeE through one or more second TRPs;
in case that the QCL configuration information indicates a first reference signal corresponding to the QCL type being QCL-TypeB and a second reference signal corresponding to the QCL type being QCL-TypeA, transmitting the first reference signal corresponding to the QCL type being QCL-TypeB through the first TRP, and transmitting the second reference signal corresponding to the QCL type being QCL-TypeA through one or more second TRPs;
in case that the QCL configuration information indicates a first reference signal corresponding to the QCL type being QCL-TypeB and a second reference signal corresponding to the QCL type being QCL-TypeE, transmitting the first reference signal corresponding to the QCL type being QCL-TypeB through the first TRP, and transmitting the second reference signal corresponding to the QCL type being QCL-TypeE through one or more second TRPs; and
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through the first TRP, and transmitting the second reference signal corresponding to the QCL type being QCL-TypeA through one or more second TRPs.

The above-mentioned network device according to the embodiments of the present application can implement all the method steps implemented by the above-mentioned method embodiments, and can achieve the same effect. The same parts and beneficial effects as the same method embodiments will not be repeated here.

Based on any foregoing embodiment, the network device further includes:
a sixth transmitting unit, configured to transmit indication information of a QCL reference signal for the uplink signal to the UE, where the QCL reference signal is used for indicating a reference signal for determining the transmission frequency of the uplink signal.

The above-mentioned network device according to the embodiments of the present application can implement all the method steps implemented by the above-mentioned method embodiments, and can achieve the same effect. The same parts and beneficial effects as the same method embodiments will not be repeated here.

Based on any of the above embodiments, the QCL reference signal is a signal in the first reference signal.

The above-mentioned network device according to the embodiments of the present application can implement all the method steps implemented by the above-mentioned method embodiments, and can achieve the same effect. The same parts and beneficial effects as the same method embodiments will not be repeated here.

In some embodiments,
TCI state indication information is transmitted to the UE, where the TCI state indication information is used for indicating a TCI state corresponding to the first reference signal; or
sequence number indication information is transmitted to the UE, where the sequence number indication information is used for indicating sequence numbers of the first reference signal among all QCL-TypeA reference signals indicated by TCI states associated with the downlink signal.

FIG. 8 is a schematic structural diagram of user equipment (such as UE) according to an embodiment of the present application. As shown in FIG. 8, the UE includes a memory 801, a transceiver 802, a processor 803 and a user interface 804, where the memory 801, the transceiver 802, the processor 803 and the user interface 804 complete mutual communication through a bus interface. The processor 803 can read a computer program in the memory 801 and the computer program causes the processor to perform the following operations:
receiving quasi-co-location (QCL) configuration information of a downlink signal to the UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
obtaining the downlink signal according to the QCL configuration information.

In the UE according to the embodiments of the present application, by using the above QCL configuration information, the UE can obtain accurate delay property and Doppler property of the downlink signal, and thus the performance of downlink transmission in high-speed mobile scenarios is improved.

Based on any of the above embodiments, the obtaining the downlink signal according to the QCL configuration information includes:
determining the Doppler property of the downlink signal according to the first reference signal;
determining the delay property of the downlink signal according to the second reference signal; and
obtaining the downlink signal according to the Doppler property and the delay property.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the determining the delay property of the downlink signal according to the second reference signal includes:
determining the delay property of the downlink signal according to both the first reference signal and the second reference signal.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, before the obtaining the downlink signal according to the Doppler property and the delay property, the computer program causes the processor to further perform the following operations:
receiving the reference signals transmitted by the network device, where the second reference signal is transmitted from a TRP that is different from the TRP transmitting the first reference signal among the TRPs used for transmitting the downlink signal.

Based on any of the above embodiments, before the obtaining the downlink signal according to the Doppler property and the delay property, the computer program causes the processor to further perform the following operations:
receiving the first reference signal and the second reference signal transmitted by the network device, where the second reference signal is transmitted from all TRPs used for transmitting the downlink signal.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the determining the Doppler property of the downlink signal according to the first reference signal, and the determining the delay property of the downlink signal according to the second reference signal, include:
determining the Doppler property of the downlink signal according to the first reference signal corresponding to the QCL type including both the Doppler property and the delay property; and determining the delay property of the downlink signal according to the first reference signal corresponding to the QCL type only including the delay property and the second reference signal corresponding to the QCL type including the delay property; or
determining the Doppler property of the downlink signal according to the first reference signal corresponding to the QCL type only including the Doppler property; and determining the delay property of the downlink signal according to the second reference signal corresponding to the QCL type only including the delay property; or
determining the Doppler property of the downlink signal according to the first reference signal corresponding to the QCL type only including the Doppler property; and determining the delay property of the downlink signal according to the second reference signal corresponding to the QCL type including the Doppler property and the delay property; or
determining the delay property of the downlink signal according to all the first reference signals corresponding to the QCL type including the Doppler property and the delay property and all the second reference signals corresponding to the QCL type including the Doppler property and the delay property; and determining the Doppler property of the downlink signal according to the first reference signal corresponding to the QCL type including the Doppler property and the delay property; or
determining the delay property of the downlink signal according to the second reference signal corresponding to the QCL type including the Doppler property and the delay property; and determining the Doppler property of the downlink signal according to the first reference signal corresponding to the QCL type including the Doppler property and the delay property.

The above-mentioned UE according to the embodiments of the present application can implement all the method steps implemented by the above-mentioned method embodiments, and can achieve the same effect. The same parts and beneficial effects as the same method embodiments will not be repeated here.

In an embodiment, the first reference signal is a specific reference signal among reference signals corresponding to the QCL type including Doppler property and delay property.

The above-mentioned UE according to the embodiments of the present application can implement all the method steps implemented by the above-mentioned method embodiments, and can achieve the same effect. The same parts and beneficial effects as the same method embodiments will not be repeated here.

In an embodiment, the second reference signal is a reference signal corresponding to the QCL type including Doppler property and delay property.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the first reference signal is a reference signal corresponding to a QCL type being QCL-TypeA, and the second reference signal is a reference signal corresponding to a QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the QCL configuration information is carried by a set of transmission configuration indication (TCI) states, and the set of TCI states is any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the determining the Doppler property of the downlink signal according to the first reference signal, and the determining the delay property of the downlink signal according to the second reference signal, include:
determining the delay property of the downlink signal according to the first reference signal corresponding to the QCL type being QCL-TypeA and the second reference signal corresponding to the QCL type being QCL-TypeE, and determining the Doppler property of the downlink signal according to the first reference signal corresponding to the QCL type being QCL-TypeA; or
determining a time-domain property of the downlink signal according to the second reference signal corresponding to the QCL type being QCL-TypeA, and determining the Doppler property of the downlink signal according to the first reference signal corresponding to the QCL type being QCL-TypeB; or
determining a time-domain property of the downlink signal according to the second reference signal corresponding to the QCL type being QCL-TypeE, and determining the Doppler property of the downlink signal according to the first reference signal corresponding to the QCL type being QCL-TypeB; or
determining the delay property of the downlink signal according to all the first reference signal corresponding to the QCL type being QCL-TypeA and all the second reference signal corresponding to the QCL type being QCL-TypeA, and determining the Doppler property of the downlink signal according to a specific reference signal in the first reference signal corresponding to the QCL type being QCL-TypeA.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the specific reference signal is a reference signal indicated by the network device or a default reference signal.

The above-mentioned UE according to the embodiments of the present application can implement all the method steps implemented by the above-mentioned method embodiments, and can achieve the same effect. The same parts and beneficial effects as the same method embodiments will not be repeated here.

Based on the above embodiments, in some embodiments, the network device performs frequency pre-compensation when transmitting the downlink signal; the computer program causes the processor to further perform the following operations:
receiving indication information of the QCL reference signal for the uplink signal; and
determining a transmitting frequency of the uplink signal according to the indication information, where the uplink signal is an uplink signal used to determine a frequency pre-compensation value for the downlink signal in the network device.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the downlink signal is transmitted through multiple TRPs, frequency pre-compensation is performed at one or more TRPs, and the computer program causes the processor to perform the following operations:
determining, by using the first reference signal, a transmitting frequency of the uplink signal used to calculate the frequency pre-compensation value for the downlink signal at each TRP.

The above-mentioned UE according to the embodiments of the present application can implement all the method steps implemented by the above-mentioned method embodiments, and can achieve the same effect. The same parts and beneficial effects as the same method embodiments will not be repeated here.

FIG. 9 is a schematic structural diagram of another user equipment (UE) according to another embodiment of the present application. As shown in FIG. 9, the network device includes a first receiving unit 901 and a second obtaining unit 902, where
the first receiving unit 901 is configured to receive quasi-co-location (QCL) configuration information of a downlink signal to the UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
the second obtaining unit 902 is configured to obtain the downlink signal according to the QCL configuration information.

In the UE according to the embodiments of the present application, by using the above QCL configuration information, the UE can obtain accurate delay property and Doppler property of the downlink signal, and thus the performance of downlink transmission in high-speed mobile scenarios is improved.

Based on any of the above embodiments, the second obtaining unit is configured to:
determine the Doppler property of the downlink signal according to the first reference signal;
determine the delay property of the downlink signal according to the second reference signal; and
obtain the downlink signal according to the Doppler property and the delay property.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the second obtaining unit is configured to:
determine the delay property of the downlink signal according to both the first reference signal and the second reference signal.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, before the obtaining the downlink signal according to the Doppler property and the delay property, the reference signals transmitted by the network device are received, where the second reference signal is transmitted from a TRP that is different from the TRP transmitting the first reference signal among the TRPs used for transmitting the downlink signal.

Based on any of the above embodiments, before the obtaining the downlink signal according to the Doppler property and the delay property, the reference signals transmitted by the network device are received, where the second reference signal is transmitted from all TRPs used for transmitting the downlink signal.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the second obtaining unit is further configured to:
determine the Doppler property of the downlink signal according to the first reference signal corresponding to the QCL type including both the Doppler property and the delay property; and determine the delay property of the downlink signal according to the first reference signal corresponding to the QCL type only including the delay property and the second reference signal corresponding to the QCL type including the delay property; or
determine the Doppler property of the downlink signal according to the first reference signal corresponding to the QCL type only including the Doppler property; and determine the delay property of the downlink signal according to the second reference signal corresponding to the QCL type only including the delay property; or
determine the Doppler property of the downlink signal according to the first reference signal corresponding to the QCL type only including the Doppler property; and determine the delay property of the downlink signal according to the second reference signal corresponding to the QCL type including the Doppler property and the delay property; or
determine the delay property of the downlink signal according to all the first reference signals corresponding to the QCL type including the Doppler property and the delay property and all the second reference signals corresponding to the QCL type including the Doppler property and the delay property; and determine the Doppler property of the downlink signal according to the first reference signal corresponding to the QCL type including the Doppler property and the delay property; or
determine the delay property of the downlink signal according to the second reference signal corresponding to the QCL type including the Doppler property and the delay property; and determine the Doppler property of the downlink signal according to the first reference signal corresponding to the QCL type including the Doppler property and the delay property.

The above-mentioned UE according to the embodiments of the present application can implement all the method steps implemented by the above-mentioned method embodiments, and can achieve the same effect. The same parts and beneficial effects as the same method embodiments will not be repeated here.

In an embodiment, the first reference signal is a specific reference signal among reference signals corresponding to the QCL type including Doppler property and delay property.

The above-mentioned UE according to the embodiments of the present application can implement all the method steps implemented by the above-mentioned method embodiments, and can achieve the same effect. The same parts and beneficial effects as the same method embodiments will not be repeated here.

In an embodiment, the second reference signal is a reference signal corresponding to the QCL type including Doppler property and delay property.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the first reference signal is a reference signal corresponding to a QCL type being QCL-TypeA, and the second reference signal is a reference signal corresponding to a QCL type being QCL-TypeE, where the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, where the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the QCL configuration information is carried by a set of transmission configuration indication (TCI) states, and the set of TCI states is any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the second obtaining unit is further configured to:
determine the delay property of the downlink signal according to the first reference signal corresponding to the QCL type being QCL-TypeA and the second reference signal corresponding to the QCL type being QCL-TypeE, and determine the Doppler property of the downlink signal according to the first reference signal corresponding to the QCL type being QCL-TypeA; or
determine a time-domain property of the downlink signal according to the second reference signal corresponding to the QCL type being QCL-TypeA, and determine the Doppler property of the downlink signal according to the first reference signal corresponding to the QCL type being QCL-TypeB; or
determine a time-domain property of the downlink signal according to the second reference signal corresponding to the QCL type being QCL-TypeE, and determine the Doppler property of the downlink signal according to the first reference signal corresponding to the QCL type being QCL-TypeB; or
determine the delay property of the downlink signal according to all the first reference signal corresponding to the QCL type being QCL-TypeA and all the second reference signal corresponding to the QCL type being QCL-TypeA, and determine the Doppler property of the downlink signal according to a specific reference signal in the first reference signal corresponding to the QCL type being QCL-TypeA.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the specific reference signal is a reference signal indicated by the network device or a default reference signal, where the reference signal indicated by the network device includes: a reference signal corresponding to *i-th* specific QCL type in the TCI state indicated directly by the network device where i is a positive integer; or a specific reference signal corresponding to QCL-TypeA indicated by the network device in a TCI state; or a reference signal corresponding to QCL-TypeA transmitted from a specific TRP indicated by the network device, where the default reference signal is a specific reference signal corresponding to QCL-TypeA agreed between the network device and the UE.

The above-mentioned UE according to the embodiments of the present application can implement all the method steps implemented by the above-mentioned method embodiments, and can achieve the same effect. The same parts and beneficial effects as the same method embodiments will not be repeated here.

Based on the above embodiments, the network device performs frequency pre-compensation when transmitting the downlink signal; the UE further includes:
a third receiving unit, configured to receive indication information of the QCL reference signal for the uplink signal; and
a second determining unit, configured to determine a transmitting frequency of the uplink signal according to the indication information, where the uplink signal is an uplink signal used to determine a frequency pre-compensation value for the downlink signal in the network device.

The above-mentioned UE according to the embodiments of the present application can implement all the method steps implemented by the above-mentioned method embodiments, and can achieve the same effect. The same parts and beneficial effects as the same method embodiments will not be repeated here.

Based on any of the above embodiments, the downlink signal is transmitted through multiple TRPs, frequency pre-compensation is performed at one or more TRPs, and the UE further includes:
a third determining unit, configured to determine, by using the first reference signal, a transmitting frequency of the uplink signal used to calculate the frequency pre-compensation value for the downlink signal at each TRP.

The above-mentioned UE according to the embodiments of the present application can implement all the method steps implemented by the above-mentioned method embodiments, and can achieve the same effect. The same parts and beneficial effects as the same method embodiments will not be repeated here.

Based on any one embodiment above, an embodiment of the present application further provides a processor readable storage medium having stored thereon a computer program that cause a processor to execute the steps of the beam indication method described above, which includes:
transmitting quasi-co-location (QCL) configuration information of a downlink signal to the UE, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
transmitting the downlink signal to the UE; or
receiving QCL configuration information of a downlink signal, where the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
obtaining the downlink signal according to the QCL configuration information.

It should be noted that the computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc. The device embodiments described above are merely illustrative, where the units described as separate components may or may not be physically separate, and the components displayed as units may or may not be physical units, that is, may be located at the same place or be distributed to multiple network units. Some or all of the modules may be selected according to actual needs to achieve the purpose of the solution of the present embodiment. Those of ordinary skill in the art can understand and implement the embodiments described above without paying creative labors.

Through the description of the embodiments above, those skilled in the art can clearly understand that the various embodiments can be implemented by means of software and a necessary general hardware platform, and of course, by hardware. Based on such understanding, the solutions of the present application in essence or a part of the solutions that contributes to the prior art, or a part of the solutions, may be embodied in the form of a software product, which may be stored in a storage medium such as ROM/RAM, magnetic discs, optical discs, etc., and includes several instructions to cause a computer device (which may be a personal computer, server, or network device, etc.) to perform the methods described in various embodiments or a part thereof

It should be noted that the above embodiments are only used to explain the solutions of the present application, and are not limited thereto; although the present application is described in detail with reference to the foregoing embodiments, it should be understood by those skilled in the art that they can still modify the solutions described in the foregoing embodiments and make equivalent replacements to a part of the features and these modifications and substitutions do not depart from the scope of the solutions of the embodiments of the present application.

## Claims

1. A method for information transmission, comprising:
transmitting quasi-co-location, QCL, configuration information of a downlink signal to the UE, wherein the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
transmitting the downlink signal to the UE.

2. The method of claim 1, wherein the transmitting the downlink signal to the UE comprises:
transmitting the downlink signal through multiple transmission reception points, TRPs, and
the method further comprises:
transmitting the reference signals to the UE, wherein the second reference signal is transmitted from a TRP that is different from a TRP used for transmitting the first reference signal among the TRPs used for transmitting the downlink signal.

3. The method of claim 1, wherein the transmitting the downlink signal to the UE comprises:
transmitting the downlink signal through multiple transmission reception points, TRPs,
the method further comprises:
transmitting the second reference signal simultaneously to the UE by using all TRPs used for transmitting the downlink signal.

4. The method of claim 1, wherein the first reference signal is a reference signal corresponding to a QCL type being QCL-TypeA, and the second reference signal is a reference signal corresponding to a QCL type being QCL-TypeE, wherein the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, wherein the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

5. The method of claim 1, wherein the QCL configuration information is carried by a set of transmission configuration indication, TCI, states, and the set of TCI states comprises any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

6. The method of any one of claims 1 to 5, wherein the downlink signal is transmitted by multiple transmission reception points, TRPs, and before transmitting the downlink signal to the UE, the method further comprises any of the following operations:
determining a frequency offset value of an uplink signal at a first TRP, and determining a frequency compensation value of the downlink signal at a second TRP according to the frequency offset value at the first TRP, wherein the first TRP is a TRP selected by a network device, the second TRP is one or more TRPs other than the first TRP;
determining a frequency offset value of the uplink signal at a third TRP in a reference beam direction, determining a frequency compensation value of the downlink signal at the third TRP according to the frequency offset value at the third TRP, and determining the frequency compensation value at the third TRP as a frequency compensation value at a fourth TRP in the reference beam direction, wherein the third TRP is a TRP in the reference beam direction, and the fourth TRP is one or more TRPs other than the third TRP in the reference beam direction;
determining a frequency offset value according to a signal received by a fifth TRP in the reference beam direction based on the uplink signal, and determining a frequency compensation value of a sixth TRP in the reference beam direction according to the frequency offset value, wherein the fifth TRP is a group of TRPs in the reference beam direction, and the sixth TRP is one or more TRPs other than the fifth TRP in the reference beam direction; and
determining a frequency offset value according to a signal received by all TRPs in the reference beam direction based on the uplink signal, and determining a frequency compensation value at a seventh TRP in another beam direction according to the frequency offset value, wherein the seventh TRP is one or more TRPs in a beam direction other than the reference beam direction;
wherein the transmitting the downlink signal to the UE comprises:
transmitting the downlink signal to the UE according to the frequency compensation value.

7. The method of claim 6, wherein the determining a frequency compensation value of the downlink signal at a second TRP according to the frequency offset value at the first TRP comprises:
obtaining a difference between the frequency offset value at the first TRP and a frequency offset value at the second TRP;
determining, in case that a frequency compensation value of the first TRP is 0, or no adjustment is performed on a downlink frequency of the downlink signal at the first TRP, that the frequency compensation value at the second TRP is the difference; or
determining, in case that the frequency compensation value of the first TRP is Δ*f*₁, that the frequency compensation value at the second TRP is a sum of the difference and Δ*f*₁, wherein Δ*f*₁ is not 0.

8. The method of claim 6, further comprising: after determining the frequency offset value of the uplink signal at the third TRP in the direction of the reference beam,
determining frequency compensation values at each TRP in another beam direction according to the frequency offset value at the third TRP.

9. The method of claim 8, wherein the determining frequency compensation values at each TRP in another beam direction according to the frequency offset value at the third TRP comprises:
obtaining a difference between the frequency offset value at the third TRP and a frequency offset value at an eighth TRP, wherein the eighth TRP is one or more TRPs in a beam direction other than the reference beam direction;
determining, in case that the frequency compensation value of the third TRP is 0, or no adjustment is performed on a downlink frequency of the downlink signal at the third TRP, that frequency compensation values at all TRPs in a beam direction where the eighth TRP is located are the difference; or
determining, in case that the frequency compensation value of the third TRP is Δ*f*₂, that the frequency compensation values at all TRPs in a beam direction where the eighth TRP is located are a sum of the difference and Δ*f*₂, wherein Δ*f*₂ is not 0.

10. The method of claim 6, further comprising at least one of the following items:
in case that the QCL configuration information indicates a first reference signal corresponding to the QCL type being QCL-TypeA and a second reference signal corresponding to the QCL type being QCL-TypeE, transmitting the first reference signal corresponding to the QCL type being QCL-TypeA through the first TRP, and transmitting the second reference signal corresponding to the QCL type being QCL-TypeE through one or more second TRPs;
in case that the QCL configuration information indicates a first reference signal corresponding to the QCL type being QCL-TypeB and a second reference signal corresponding to the QCL type being QCL-TypeA, transmitting the first reference signal corresponding to the QCL type being QCL-TypeB through the first TRP, and transmitting the second reference signal corresponding to the QCL type being QCL-TypeA through one or more second TRPs;
in case that the QCL configuration information indicates a first reference signal corresponding to the QCL type being QCL-TypeB and a second reference signal corresponding to the QCL type being QCL-TypeE, transmitting the first reference signal corresponding to the QCL type being QCL-TypeB through the first TRP, and transmitting the second reference signal corresponding to the QCL type being QCL-TypeE through one or more second TRPs; and
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through the first TRP, and transmitting the second reference signal corresponding to the QCL type being QCL-TypeA through one or more second TRPs.

11. The method of claim 6, further comprising:
transmitting indication information of a QCL reference signal for the uplink signal to the UE, wherein the QCL reference signal is used for indicating a reference signal for determining the transmission frequency of the uplink signal.

12. The method of claim 11, wherein the QCL reference signal is a signal in the first reference signal.

13. The method of claim 1, further comprising:
transmitting TCI state indication information to the UE, wherein the TCI state indication information is used for indicating a TCI state corresponding to the first reference signal; or
transmitting sequence number indication information to the UE, wherein the sequence number indication information is used for indicating sequence numbers of the first reference signal among all QCL-TypeA reference signals indicated by TCI states associated with the downlink signal.

14. A method for information transmission, comprising:
receiving quasi-co-location, QCL, configuration information of a downlink signal to the UE, wherein the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
obtaining the downlink signal according to the QCL configuration information.

15. The method of claim 14, wherein the obtaining the downlink signal according to the QCL configuration information comprises:
determining the Doppler property of the downlink signal according to the first reference signal;
determining the delay property of the downlink signal according to the second reference signal; and
obtaining the downlink signal according to the Doppler property and the delay property.

16. The method of claim 15, wherein the determining the delay property of the downlink signal according to the second reference signal comprises:
determining the delay property of the downlink signal according to both the first reference signal and the second reference signal.

17. The method of claim 15, wherein the determining the Doppler property of the downlink signal according to the first reference signal, and the determining the delay property of the downlink signal according to the second reference signal, comprise:
determining the Doppler property of the downlink signal according to the first reference signal corresponding to the QCL type comprising both the Doppler property and the delay property; and determining the delay property of the downlink signal according to the first reference signal corresponding to the QCL type only comprising the delay property and the second reference signal corresponding to the QCL type comprising the delay property; or
determining the Doppler property of the downlink signal according to the first reference signal corresponding to the QCL type only comprising the Doppler property; and determining the delay property of the downlink signal according to the second reference signal corresponding to the QCL type only comprising the delay property; or
determining the Doppler property of the downlink signal according to the first reference signal corresponding to the QCL type only comprising the Doppler property; and determining the delay property of the downlink signal according to the second reference signal corresponding to the QCL type comprising the Doppler property and the delay property; or
determining the delay property of the downlink signal according to all the first reference signals corresponding to the QCL type comprising the Doppler property and the delay property and all the second reference signals corresponding to the QCL type comprising the Doppler property and the delay property; and determining the Doppler property of the downlink signal according to the first reference signal corresponding to the QCL type comprising the Doppler property and the delay property; or
determining the delay property of the downlink signal according to the second reference signal corresponding to the QCL type comprising the Doppler property and the delay property; and determining the Doppler property of the downlink signal according to the first reference signal corresponding to the QCL type comprising the Doppler property and the delay property.

18. The method of claim 15, wherein the first reference signal is a specific reference signal among reference signals corresponding to the QCL type comprising Doppler property and delay property.

19. The method of claim 15, wherein the second reference signal is a reference signal corresponding to the QCL type comprising Doppler property and delay property.

20. The method of any one of claims 14 to 19, wherein the first reference signal is a reference signal corresponding to a QCL type being QCL-TypeA, and the second reference signal is a reference signal corresponding to a QCL type being QCL-TypeE, wherein the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, wherein the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

21. The method of any one of claims 14 to 19, wherein the QCL configuration information is carried by a set of transmission configuration indication, TCI, states, and the set of TCI states comprises any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

22. The method of claim 15, wherein the determining the Doppler property of the downlink signal according to the first reference signal, and the determining the delay property of the downlink signal according to the second reference signal, comprise:
determining the delay property of the downlink signal according to the first reference signal corresponding to the QCL type being QCL-TypeA and the second reference signal corresponding to the QCL type being QCL-TypeE, and determining the Doppler property of the downlink signal according to the first reference signal corresponding to the QCL type being QCL-TypeA; or
determining a time-domain property of the downlink signal according to the second reference signal corresponding to the QCL type being QCL-TypeA, and determining the Doppler property of the downlink signal according to the first reference signal corresponding to the QCL type being QCL-TypeB; or
determining a time-domain property of the downlink signal according to the second reference signal corresponding to the QCL type being QCL-TypeE, and determining the Doppler property of the downlink signal according to the first reference signal corresponding to the QCL type being QCL-TypeB; or
determining the delay property of the downlink signal according to all the first reference signal corresponding to the QCL type being QCL-TypeA and all the second reference signal corresponding to the QCL type being QCL-TypeA, and determining the Doppler property of the downlink signal according to a specific reference signal in the first reference signal corresponding to the QCL type being QCL-TypeA.

23. The method of claim 18 or 22, wherein the specific reference signal is a reference signal indicated by the network device or a default reference signal.

24. The method of claim 14, wherein frequency pre-compensation is performed when the network device transmits the downlink signal, and the method further comprises:
receiving indication information of the QCL reference signal for the uplink signal; and
determining a transmitting frequency of the uplink signal according to the indication information, wherein the uplink signal is an uplink signal used to determine a frequency pre-compensation value for the downlink signal in the network device.

25. The method of claim 14 or 24, wherein the downlink signal is transmitted through multiple TRPs, frequency pre-compensation is performed at one or more TRPs, and the method further comprises:
determining, by using the first reference signal, a transmitting frequency of the uplink signal used to calculate the frequency pre-compensation value for the downlink signal at each TRP.

26. A network device, comprising a memory, a transceiver, and a processor,
wherein the memory is configured to store a computer program, the transceiver is configured to transmit and receive data under the control of the processor, and the processor is configured to read the computer program in the memory and perform the following operations of:
transmitting quasi-co-location, QCL, configuration information of a downlink signal to the UE, wherein the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
transmitting the downlink signal to the UE.

27. The network device of claim 26, wherein the transmitting the downlink signal to the UE comprises:
transmitting the downlink signal through multiple transmission reception points, TRPs,
the transmitting the downlink signal to the UE further comprises:
transmitting the reference signals to the UE, wherein the second reference signal is transmitted from a TRP that is different from a TRP used for transmitting the first reference signal among the TRPs used for transmitting the downlink signal.

28. The network device of claim 26, wherein the transmitting the downlink signal to the UE comprises:
transmitting the downlink signal through multiple transmission reception points, TRPs,
the transmitting the downlink signal to the UE further comprises:
transmitting the second reference signal simultaneously to the UE by using all TRPs used for transmitting the downlink signal.

29. The network device of claim 26, wherein the first reference signal is a reference signal corresponding to a QCL type being QCL-TypeA, and the second reference signal is a reference signal corresponding to a QCL type being QCL-TypeE, wherein the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, wherein the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

30. The network device of claim 26, wherein the QCL configuration information is carried by a set of transmission configuration indication, TCI, states, and the set of TCI states comprises any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

31. The network device of any one of claims 26 to 29, wherein the downlink signal is transmitted by multiple transmission reception points, TRPs, and before transmitting the downlink signal to the UE, the processor is configured to further perform any of the following operations:
determining a frequency offset value of an uplink signal at a first TRP, and determining a frequency compensation value of the downlink signal at a second TRP according to the frequency offset value at the first TRP, wherein the first TRP is a TRP selected by the network device, the second TRP is one or more TRPs other than the first TRP;
determining a frequency offset value of the uplink signal at a third TRP in a reference beam direction, determining a frequency compensation value of the downlink signal at the third TRP according to the frequency offset value at the third TRP, and determining the frequency compensation value at the third TRP as a frequency compensation value at a fourth TRP in the reference beam direction, wherein the third TRP is a TRP in the reference beam direction, and the fourth TRP is one or more TRPs other than the third TRP in the reference beam direction;
determining a frequency offset value according to a signal received by a fifth TRP in the reference beam direction based on the uplink signal, and determining a frequency compensation value of a sixth TRP in the reference beam direction according to the frequency offset value, wherein the fifth TRP is a group of TRPs in the reference beam direction, and the sixth TRP is one or more TRPs other than the fifth TRP in the reference beam direction; and
determining a frequency offset value according to a signal received by all TRPs in the reference beam direction based on the uplink signal, and determining a frequency compensation value at a seventh TRP in another beam direction according to the frequency offset value, wherein the seventh TRP is one or more TRPs in a beam direction other than the reference beam direction;
wherein the transmitting the downlink signal to the UE comprises:
transmitting the downlink signal to the UE according to the frequency compensation value.

32. The network device of claim 31, wherein the determining a frequency compensation value of the downlink signal at a second TRP according to the frequency offset value at the first TRP comprises:
obtaining a difference between the frequency offset value at the first TRP and a frequency offset value at the second TRP;
determining, in case that a frequency compensation value of the first TRP is 0, or no adjustment is performed on a downlink frequency of the downlink signal at the first TRP, that the frequency compensation value at the second TRP is the difference; or
determining, in case that the frequency compensation value of the first TRP is Δ*f*₁, that the frequency compensation value at the second TRP is a sum of the difference and Δ*f*₁, wherein Δ*f*₁ is not 0.

33. The network device of claim 31, wherein the processor is configured to further perform the following operation: after determining the frequency offset value of the uplink signal at the third TRP in the direction of the reference beam,
determining frequency compensation values at each TRP in another beam direction according to the frequency offset value at the third TRP.

34. The network device of claim 33, wherein the determining frequency compensation values at each TRPs in another beam direction according to the frequency offset value at the third TRP comprises:
obtaining a difference between the frequency offset value at the third TRP and a frequency offset value at an eighth TRP, wherein the eighth TRP is one or more TRPs in a beam direction other than the reference beam direction;
determining, in case that the frequency compensation value of the third TRP is 0, or no adjustment is performed on a downlink frequency of the downlink signal at the third TRP, that frequency compensation values at all TRPs in a beam direction where the eighth TRP is located are the difference; or
determining, in case that the frequency compensation value of the third TRP is Δ*f*₂, that the frequency compensation values at all TRPs in a beam direction where the eighth TRP is located are a sum of the difference and Δ*f*₂, wherein Δ*f*₂ is not 0.

35. The network device of claim 30, wherein the processor is configured to further perform at least one of the following operations:
in case that the QCL configuration information indicates a first reference signal corresponding to the QCL type being QCL-TypeA and a second reference signal corresponding to the QCL type being QCL-TypeE, transmitting the first reference signal corresponding to the QCL type being QCL-TypeA through the first TRP, and transmitting the second reference signal corresponding to the QCL type being QCL-TypeE through one or more second TRPs;
in case that the QCL configuration information indicates a first reference signal corresponding to the QCL type being QCL-TypeB and a second reference signal corresponding to the QCL type being QCL-TypeA, transmitting the first reference signal corresponding to the QCL type being QCL-TypeB through the first TRP, and transmitting the second reference signal corresponding to the QCL type being QCL-TypeA through one or more second TRPs;
in case that the QCL configuration information indicates a first reference signal corresponding to the QCL type being QCL-TypeB and a second reference signal corresponding to the QCL type being QCL-TypeE, transmitting the first reference signal corresponding to the QCL type being QCL-TypeB through the first TRP, and transmitting the second reference signal corresponding to the QCL type being QCL-TypeE through one or more second TRPs; and
in case that the QCL configuration information indicates a first reference signal corresponding to the QCL type being QCL-TypeA and a second reference signal corresponding to the QCL type being QCL-TypeA, transmitting the first reference signal corresponding to the QCL type being QCL-TypeA through the first TRP, and transmitting the second reference signal corresponding to the QCL type being QCL-TypeA through one or more second TRPs.

36. The network device of claim 30, wherein the processor is configured to further perform the following operation:
transmitting indication information of a QCL reference signal for the uplink signal to the UE, wherein the QCL reference signal is used for indicating a reference signal for determining the transmission frequency of the uplink signal.

37. The network device of claim 36, wherein the QCL reference signal is a signal in the first reference signal.

38. The network device of claim 26, wherein the processor is configured to further perform at least one of the following operations:
transmitting TCI state indication information to the UE, wherein the TCI state indication information is used for indicating a TCI state corresponding to the first reference signal; or
transmitting sequence number indication information to the UE, wherein the sequence number indication information is used for indicating sequence numbers of the first reference signal among all QCL-TypeA reference signals indicated by TCI states associated with the downlink signal.

39. A network device, comprising:
a first transmitting unit, configured to transmit quasi-co-location, QCL, configuration information of a downlink signal to the UE, wherein the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
a second transmitting unit, configured to transmit the downlink signal to the UE.

40. The network device of claim 39, wherein the second transmitting unit is further configured to:
transmit the downlink signal through multiple transmission reception points, TRPs, and
the network device further comprises:
a third transmitting unit, configured to transmit the reference signals to the UE, wherein the second reference signal is transmitted from TRP that is different from the TRP used for transmitting the first reference signal among the TRPs used for transmitting the downlink signal.

41. The network device of claim 39, wherein the second transmitting unit is further configured to:
transmit the downlink signal through multiple transmission reception points, TRPs,
the network device further comprises:
a fourth transmitting unit, configured to transmit the second reference signal simultaneously to the UE by using all TRPs used for transmitting the downlink signal.

42. The network device of claim 39, wherein the first reference signal is a reference signal corresponding to a QCL type being QCL-TypeA, and the second reference signal is a reference signal corresponding to a QCL type being QCL-TypeE, wherein the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, wherein the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

43. The network device of claim 39, wherein the QCL configuration information is carried by a set of transmission configuration indication, TCI, states, and the set of TCI states comprises any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state in indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

44. The network device of any one of claims 39 to 41, wherein the downlink signal is transmitted by multiple transmission reception points, TRPs, and the network device further comprises a first determining unit, configured to:
determine a frequency offset value of an uplink signal at a first TRP, and determine a frequency compensation value of the downlink signal at a second TRP according to the frequency offset value at the first TRP, wherein the first TRP is a TRP selected by the network device, the second TRP is one or more TRPs other than the first TRP;
determine a frequency offset value of the uplink signal at a third TRP in a reference beam direction, determine a frequency compensation value of the downlink signal at the third TRP according to the frequency offset value at the third TRP, and determine the frequency compensation value at the third TRP as a frequency compensation value at a fourth TRP in the reference beam direction, wherein the third TRP is a TRP in the reference beam direction, and the fourth TRP is one or more TRPs other than the third TRP in the reference beam direction;
determine a frequency offset value according to a signal received by a fifth TRP in the reference beam direction based on the uplink signal, and determine a frequency compensation value of a sixth TRP in the reference beam direction according to the frequency offset value, wherein the fifth TRP is a group of TRPs in the reference beam direction, and the sixth TRP is one or more TRPs other than the fifth TRP in the reference beam direction; and
determine a frequency offset value according to a signal received by all TRPs in the reference beam direction based on the uplink signal, and determine a frequency compensation value at a seventh TRP in another beam direction according to the frequency offset value, wherein the seventh TRP is one or more TRPs in a beam direction other than the reference beam direction;
wherein the second transmitting unit is configured to:
transmit the downlink signal to the UE according to the frequency compensation value.

45. The network device of claim 44, wherein the determining a frequency compensation value of the downlink signal at a second TRP according to the frequency offset value at the first TRP comprises:
obtaining a difference between the frequency offset value at the first TRP and a frequency offset value at the second TRP;
determining, in case that a frequency compensation value of the first TRP is 0, or no adjustment is performed on a downlink frequency of the downlink signal at the first TRP, that the frequency compensation value at the second TRP is the difference; or
determining, in case that the frequency compensation value of the first TRP is Δ*f*₁, that the frequency compensation value at the second TRP is a sum of the difference and Δ*f*₁, wherein Δ*f*₁ is not 0.

46. The network device of claim 44, wherein the first determining unit is further configured to: after the frequency offset value of the uplink signal at the third TRP in the direction of the reference beam is determined,
determine frequency compensation values at each TRP in another beam direction according to the frequency offset value at the third TRP.

47. The network device of claim 45, wherein the determining frequency compensation values at each TRP in another beam direction according to the frequency offset value at the third TRP comprises:
obtaining a difference between the frequency offset value at the third TRP and a frequency offset value at an eighth TRP, wherein the eighth TRP is one or more TRPs in a beam direction other than the reference beam direction;
determining, in case that the frequency compensation value of the third TRP is 0, or no adjustment is performed on a downlink frequency of the downlink signal at the third TRP, that frequency compensation values at all TRPs in a beam direction where the eighth TRP is located are the difference; or
determining, in case that the frequency compensation value of the third TRP is Δ*f*₂, that the frequency compensation values at all TRPs in a beam direction where the eighth TRP is located are a sum of the difference and Δ*f*₂, wherein Δ*f*₂ is not 0.

48. The network device of claim 44, wherein the network device further comprises a fifth transmitting unit, configured to:
in case that the QCL configuration information indicates a first reference signal corresponding to the QCL type being QCL-TypeA and a second reference signal corresponding to the QCL type being QCL-TypeE, transmit the first reference signal corresponding to the QCL type being QCL-TypeA through the first TRP, and transmit the second reference signal corresponding to the QCL type being QCL-TypeE through one or more second TRPs;
in case that the QCL configuration information indicates a first reference signal corresponding to the QCL type being QCL-TypeB and a second reference signal corresponding to the QCL type being QCL-TypeA, transmit the first reference signal corresponding to the QCL type being QCL-TypeB through the first TRP, and transmit the second reference signal corresponding to the QCL type being QCL-TypeA through one or more second TRPs;
in case that the QCL configuration information indicates a first reference signal corresponding to the QCL type being QCL-TypeB and a second reference signal corresponding to the QCL type being QCL-TypeE, transmit the first reference signal corresponding to the QCL type being QCL-TypeB through the first TRP, and transmit the second reference signal corresponding to the QCL type being QCL-TypeE through one or more second TRPs; and
in case that the QCL configuration information indicates a first reference signal corresponding to the QCL type being QCL-TypeA and a second reference signal corresponding to the QCL type being QCL-TypeA, transmit the first reference signal corresponding to the QCL type being QCL-TypeA through the first TRP, and transmit the second reference signal corresponding to the QCL type being QCL-TypeA through one or more second TRPs.

49. The network device of claim 44, further comprising:
a sixth transmitting unit, configured to transmit indication information of a QCL reference signal for the uplink signal to the UE, wherein the QCL reference signal is used for indicating a reference signal for determining the transmission frequency of the uplink signal.

50. The network device of claim 49, wherein the QCL reference signal is a signal in the first reference signal.

51. The network device of claim 39, further comprising: a seventh transmitting unit, configured to:
transmit TCI state indication information to the UE, wherein the TCI state indication information is used for indicating a TCI state corresponding to the first reference signal; or
transmit sequence number indication information to the UE, wherein the sequence number indication information is used for indicating sequence numbers of the first reference signal among all QCL-TypeA reference signals indicated by TCI states associated with the downlink signal.

52. User equipment, comprising a memory, a transceiver, and a processor,
wherein the memory is configured to store a computer program, the transceiver is configured to transmit and receive data under the control of the processor, and the processor is configured to read the computer program in the memory and perform the following operations of:
receiving quasi-co-location, QCL, configuration information of a downlink signal to the UE, wherein the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
obtaining the downlink signal according to the QCL configuration information.

53. The user equipment of claim 52, wherein the obtaining the downlink signal according to the QCL configuration information comprises:
determining the Doppler property of the downlink signal according to the first reference signal;
determining the delay property of the downlink signal according to the second reference signal; and
obtaining the downlink signal according to the Doppler property and the delay property.

54. The user equipment of claim 53, wherein the determining the delay property of the downlink signal according to the second reference signal comprises:
determining the delay property of the downlink signal according to both the first reference signal and the second reference signal.

55. The user equipment of claim 53, wherein the determining the Doppler property of the downlink signal according to the first reference signal, and the determining the delay property of the downlink signal according to the second reference signal, comprise:
determining the Doppler property of the downlink signal according to the first reference signal corresponding to the QCL type comprising both the Doppler property and the delay property; and determining the delay property of the downlink signal according to the first reference signal corresponding to the QCL type only comprising the delay property and the second reference signal corresponding to the QCL type comprising the delay property; or
determining the Doppler property of the downlink signal according to the first reference signal corresponding to the QCL type only comprising the Doppler property; and determining the delay property of the downlink signal according to the second reference signal corresponding to the QCL type only comprising the delay property; or
determining the Doppler property of the downlink signal according to the first reference signal corresponding to the QCL type only comprising the Doppler property; and determining the delay property of the downlink signal according to the second reference signal corresponding to the QCL type comprising the Doppler property and the delay property; or
determining the delay property of the downlink signal according to all the first reference signals corresponding to the QCL type comprising the Doppler property and the delay property and all the second reference signals corresponding to the QCL type comprising the Doppler property and the delay property; and determining the Doppler property of the downlink signal according to the first reference signal corresponding to the QCL type comprising the Doppler property and the delay property; or
determining the delay property of the downlink signal according to the second reference signal corresponding to the QCL type comprising the Doppler property and the delay property; and determining the Doppler property of the downlink signal according to the first reference signal corresponding to the QCL type comprising the Doppler property and the delay property.

56. The user equipment of claim 53, wherein the first reference signal is a specific reference signal among reference signals corresponding to the QCL type comprising Doppler property and delay property.

57. The user equipment of claim 53, wherein the second reference signal is a reference signal corresponding to the QCL type comprising Doppler property and delay property.

58. The user equipment of any one of claims 52 to 57, wherein the first reference signal is a reference signal corresponding to a QCL type being QCL-TypeA, and the second reference signal is a reference signal corresponding to a QCL type being QCL-TypeE, wherein the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, wherein the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

59. The user equipment of any one of claims 52 to 57, wherein the QCL configuration information is carried by a set of transmission configuration indication, TCI, states, and the set of TCI states comprises any of the following items:
at least two TCI states with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state, indicating at least both the first reference signal and the second reference signal corresponding to the QCL type being QCL-TypeA.

60. The user equipment of claim 53, wherein the determining the Doppler property of the downlink signal according to the first reference signal, and the determining the delay property of the downlink signal according to the second reference signal, comprise:
determining the delay property of the downlink signal according to the first reference signal corresponding to the QCL type being QCL-TypeA and the second reference signal corresponding to the QCL type being QCL-TypeE, and determining the Doppler property of the downlink signal according to the first reference signal corresponding to the QCL type being QCL-TypeA; or
determining a time-domain property of the downlink signal according to the second reference signal corresponding to the QCL type being QCL-TypeA, and determining the Doppler property of the downlink signal according to the first reference signal corresponding to the QCL type being QCL-TypeB; or
determining a time-domain property of the downlink signal according to the second reference signal corresponding to the QCL type being QCL-TypeE, and determining the Doppler property of the downlink signal according to the first reference signal corresponding to the QCL type being QCL-TypeB; or
determining the delay property of the downlink signal according to all the first reference signal corresponding to the QCL type being QCL-TypeA and all the second reference signal corresponding to the QCL type being QCL-TypeA, and determining the Doppler property of the downlink signal according to a specific reference signal in the first reference signal corresponding to the QCL type being QCL-TypeA.

61. The user equipment of claim 56 or 60, wherein the specific reference signal is a reference signal indicated by the network device or a default reference signal.

62. The user equipment of claim 52, wherein frequency pre-compensation is performed when the network device transmits the downlink signal; the processor is configured to further perform the following operations:
receiving indication information of the QCL reference signal for the uplink signal; and
determining a transmitting frequency of the uplink signal according to the indication information, wherein the uplink signal is an uplink signal used to determine a frequency pre-compensation value for the downlink signal in the network device.

63. The user equipment of claim 52 or 62, wherein the downlink signal is transmitted through multiple TRPs, and frequency pre-compensation is performed at one or more TRPs, the processor is configured to further perform the following operation:
determining, by using the first reference signal, a transmitting frequency of the uplink signal used to calculate the frequency pre-compensation value for the downlink signal at each TRP.

64. User equipment, comprising:
a first receiving unit, configured to receive quasi-co-location, QCL, configuration information of a downlink signal to the UE, wherein the QCL configuration information indicates at least two reference signals and QCL types corresponding to the reference signals, a first reference signal in the reference signals is used to determine a Doppler property of the downlink signal, a second reference signal in the reference signals is used to determine a delay property of the downlink signal, the number of the first reference signal is one or more, and the number of the second reference signal is one or more; and
a second obtaining unit, configured to obtain the downlink signal according to the QCL configuration information.

65. The user equipment of claim 64, wherein he second obtaining unit is further configured to:
determine the Doppler property of the downlink signal according to the first reference signal;
determine the delay property of the downlink signal according to the second reference signal; and
obtain the downlink signal according to the Doppler property and the delay property.

66. The user equipment of claim 65, wherein the delay property of the downlink signal according to the second reference signal is determined by:
determining the delay property of the downlink signal according to both the first reference signal and the second reference signal.

67. The user equipment of claim 65, wherein the Doppler property of the downlink signal is determined according to the first reference signal; and the delay property of the downlink signal is determined according to the second reference signal by:
determining the Doppler property of the downlink signal according to the first reference signal corresponding to the QCL type comprising both the Doppler property and the delay property; and determining the delay property of the downlink signal according to the first reference signal corresponding to the QCL type only comprising the delay property and the second reference signal corresponding to the QCL type comprising the delay property; or
determining the Doppler property of the downlink signal according to the first reference signal corresponding to the QCL type only comprising the Doppler property; and determining the delay property of the downlink signal according to the second reference signal corresponding to the QCL type only comprising the delay property; or
determining the Doppler property of the downlink signal according to the first reference signal corresponding to the QCL type only comprising the Doppler property; and determining the delay property of the downlink signal according to the second reference signal corresponding to the QCL type comprising the Doppler property and the delay property; or
determining the delay property of the downlink signal according to all the first reference signals corresponding to the QCL type comprising the Doppler property and the delay property and all the second reference signals corresponding to the QCL type comprising the Doppler property and the delay property; and determining the Doppler property of the downlink signal according to the first reference signal corresponding to the QCL type comprising the Doppler property and the delay property; or
determining the delay property of the downlink signal according to the second reference signal corresponding to the QCL type comprising the Doppler property and the delay property; and determining the Doppler property of the downlink signal according to the first reference signal corresponding to the QCL type comprising the Doppler property and the delay property.

68. The user equipment of claim 65, wherein the first reference signal is a specific reference signal among reference signals corresponding to the QCL type comprising Doppler property and delay property.

69. The user equipment of claim 65, wherein the second reference signal is a reference signal corresponding to the QCL type comprising Doppler property and delay property.

70. The user equipment of any one of claims 64 to 69, wherein the first reference signal is a reference signal corresponding to a QCL type being QCL-TypeA, and the second reference signal is a reference signal corresponding to a QCL type being QCL-TypeE, wherein the QCL-TypeE represents a QCL type indicating average delay and delay spread, and the QCL-TypeA represents a QCL type indicating Doppler shift, Doppler spread, average delay, and delay spread; or
the first reference signal is a reference signal corresponding to the QCL type being QCL-TypeB, and the second reference signal is a reference signal corresponding to the QCL type being QCL-TypeA, wherein the QCL-TypeB represents a QCL type indicating Doppler shift and Doppler spread; or
the first reference signal is a reference signal corresponding to the QCL type being QCL-TypeB, and the second reference signal is a reference signal corresponding to the QCL type being QCL-TypeE; or
both the first reference signal and the second reference signal are reference signals corresponding to the QCL type being QCL-TypeA.

71. The user equipment of any one of claims 64 to 69, wherein the QCL configuration information is carried by a set of transmission configuration indication, TCI, states, and the set of TCI states comprises any of the following items:
at least two TCI states, with one TCI state indicating at least the first reference signal corresponding to the QCL type being QCL-TypeA, and another TCI state indicating at least the second reference signal corresponding to the QCL type being QCL-TypeE;
at least two TCI states with one TCI state indicating at least the first reference signal corresponding to the QCL type being QCL-TypeB, and another TCI state indicating at least the second reference signal corresponding to the QCL type being QCL-TypeA;
at least one TCI state indicating at least the first reference signal corresponding to the QCL type being QCL-TypeB, and the second reference signal corresponding to the QCL type being QCL-TypeA;
at least two TCI states with one TCI state indicating at least the first reference signal corresponding to the QCL type being QCL-TypeB, and another TCI state indicating at least the second reference signal corresponding to the QCL type being QCL-TypeE;
at least one TCI state indicating at least the first reference signal corresponding to the QCL type being QCL-TypeB, and the second reference signal corresponding to the QCL type being QCL-TypeE;
at least two TCI states with one TCI state indicating at least the first reference signal corresponding to the QCL type being QCL-TypeA, and another TCI state indicating at least the second reference signal corresponding to the QCL type being QCL-TypeA;
at least one TCI state indicating at least the first reference signal corresponding to the QCL type being QCL-TypeA, and the second reference signal corresponding to the QCL type being QCL-TypeA; and
at least one TCI state indicating at least both the first reference signal and the second reference signal corresponding to the QCL type being QCL-TypeA.

72. The user equipment of claim 65, wherein the determining the Doppler property of the downlink signal according to the first reference signal, and the determining the delay property of the downlink signal according to the second reference signal, comprise:
determining the delay property of the downlink signal according to the first reference signal corresponding to the QCL type being QCL-TypeA and the second reference signal corresponding to the QCL type being QCL-TypeE, and determining the Doppler property of the downlink signal according to the first reference signal corresponding to the QCL type being QCL-TypeA; or
determining a time-domain property of the downlink signal according to the second reference signal corresponding to the QCL type being QCL-TypeA, and determining the Doppler property of the downlink signal according to the first reference signal corresponding to the QCL type being QCL-TypeB; or
determining a time-domain property of the downlink signal according to the second reference signal corresponding to the QCL type being QCL-TypeE, and determining the Doppler property of the downlink signal according to the first reference signal corresponding to the QCL type being QCL-TypeB; or
determining the delay property of the downlink signal according to all the first reference signal corresponding to the QCL type being QCL-TypeA and all the second reference signal corresponding to the QCL type being QCL-TypeA, and determining the Doppler property of the downlink signal according to a specific reference signal in the first reference signal corresponding to the QCL type being QCL-TypeA.

73. The user equipment of claim 68 or 72, wherein the specific reference signal is a reference signal indicated by the network device or a default reference signal.

74. The user equipment of claim 64, wherein frequency pre-compensation is performed when the network device transmits the downlink signal; the user equipment further:
a third receiving unit, configured to receive indication information of the QCL reference signal for the uplink signal; and
a second determining unit, configured to determine a transmitting frequency of the uplink signal according to the indication information, wherein the uplink signal is an uplink signal used to determine a frequency pre-compensation value for the downlink signal in the network device.

75. The user equipment of claim 64 or 74, wherein the downlink signal is transmitted through multiple TRPs, frequency pre-compensation is performed at one or more TRPs, and the UE further comprises:
a third determining unit, configured to determine, by using the first reference signal, a transmitting frequency of the uplink signal used to calculate the frequency pre-compensation value for the downlink signal at each TRP.

76. A processor-readable storage medium having a computer program stored thereon that causes a processor to perform the method for information transmission according to any one
of claims 1-13 or claims 14 to 25.
